# EUROPEAN PATENT APPLICATION

(11) **EP 4 797 621 A2**
(43) Date of publication of application: **26.08.2026**
(21) Application number: 26171820.9
(22) Date of filing: 22.12.2022
(51) Int. Cl.: H04L 9/40

(54) **COMMUNICATION METHOD INTEGRATED WITH TRUSTWORTHINESS MEASUREMENT AND APPARATUS**

(30) Priority: 05.01.2022 CN 202210011106
(62) Document number(s) of the earlier application(s) in accordance with Art. 76 EPC: 22918413.0 / 4 443 927
(71) Applicant: Huawei Technologies Co., Ltd., Shenzhen, Guangdong 518129 (CN)
(72) Inventor: WANG, Donghui, Shenzhen, 518129 (CN); LIU, Fei, Shenzhen, 518129 (CN); CHEN, Liqun, Guildford, GU2 7XH (GB); NEWTON, Christopher J.P., Guildford, GU2 7XH (GB); PARTHIPAN, Loganathan, Guildford, GU2 7XH (GB); LI, Yunpeng, Guildford, GU2 7XH (GB)
(74) Representative: Goddar, Heinz J.

(57) **Abstract**

This application provides a communication method integrated with trustworthiness measurement and an apparatus. The method includes: A first network device sends a transmission request message, where the transmission request message is used to request to establish a TLS/SSL protocol-based connection, and the transmission request message is further used to request to verify whether a second network device is trusted. The first network device receives a transmission response message, where the transmission response message is used to respond to the transmission request message. The technical solutions provided in this application help determine execution states of network devices while a secure communication channel is established between the network devices, and help improve security of the network devices and security of communication between the network devices.

## Description

This application claims priority to Chinese Patent Application No. 202210011106.6, filed with the China National Intellectual Property Administration on January 5, 2022 and entitled "COMMUNICATION METHOD INTEGRATED WITH TRUSTWORTHINESS MEASUREMENT AND APPARATUS", which is incorporated herein by reference in its entirety.

### TECHNICAL FIELD

This application relates to the communication field, and more specifically, to a communication method integrated with trustworthiness measurement and apparatus.

### BACKGROUND

With the advent of the Internet of everything era, people are more dependent on networks and devices, and have increasingly higher requirements on security of the networks and the devices. A transport layer security (transport layer security, TLS) protocol is a secure channel that may ensure confidentiality and data integrity for applications that communicate with each other. This protocol considers only security of communication between the applications and cannot determine whether the communication parties are in a trusted execution state. If either party is in an untrusted state, data leakage may occur in a communication process, and the security of communication is threatened.

Therefore, when the secure channel is established, it is necessary to perform trustworthiness measurement on the communication parties, to improve the security of the networks and the devices.

### SUMMARY

This application provides a communication method integrated with trustworthiness measurement, to implement trustworthiness measurement during establishment of a communication channel between two communication parties, to improve security of a network and a device.

According to a first aspect, a communication method integrated with trustworthiness measurement is provided. The method may be performed by a first network device, or may be performed by software, hardware, a chip, or a circuit used by a first network device. This is not limited in this application. For ease of description, an example in which the method is performed by the first network device is used below for description.

The method includes: The first network device sends a transmission request message, where the transmission request message is used to request to establish a transport layer security/secure sockets layer TLS/SSL protocol-based connection, and the transmission request message is further used to request to verify whether a second network device is trusted.

The first network device receives a transmission response message, where the transmission response message is used to respond to the transmission request message.

The transmission request message is sent, so that the second network device may obtain a request for establishing a connection and a request for attesting that the second network device is trusted, which are sent by the first network device, and the second network device may make a response based on request content. Therefore, the first network device can determine whether the second network device may establish the TLS/SSL protocol-based connection and whether the second network device is trusted. This helps improve security of communication between the first network device and the second network device, helps improve security of the first network device, and helps protect security of communication data between the network devices.

With reference to the first aspect, in some implementations of the first aspect, the transmission request message includes attestation identity information. The attestation identity information is used to request to obtain first attestation information or a first attestation result. The first attestation information is used to verify whether the second network device is trusted. The first attestation result includes an attestation result indicating that the second network device is attested to be trusted.

In a possible implementation, the attestation identity information is included in an extension of the transmission request message.

The transmission request message includes the attestation identity information, so that after receiving the transmission request message, the second network device may prepare the first attestation information or the first attestation result for the first network device to verify the second network device. This helps improve the security of communication between the first network device and the second network device, helps improve the security of the first network device, and helps protect the security of the communication data between the network devices.

With reference to the first aspect, in some implementations of the first aspect, the transmission request message includes attestation request information. The attestation request information is used to request to attest that the second network device is trusted.

The transmission request message includes a first extension. The first extension includes extension information supported by the first network device. The attestation request information is included in the first extension.

The information used to request to attest that the second network device is trusted is included in an extension that is specially used to store extension information and that is of the transmission request message. This helps keep an original message structure of the transmission request message, helps reduce impact of addition of the attestation request information on information for requesting to establish the connection, helps simplify the transmission request message, helps the second network device parse the transmission request message, helps the first network device verify an identity and attestation information of the second network device, helps improve efficiency of establishing a communication connection between the network devices, helps improve the security of communication between the network devices, and helps improve the security of the network devices.

With reference to the first aspect, in some implementations of the first aspect, the attestation request information includes a first challenge value. The first challenge value is used to generate first attestation information. The first attestation information is used to verify whether the second network device is trusted.

The first challenge value is any one of a timestamp, a trusted random number, and a value of an agreed field.

In a possible implementation, the first challenge value is the timestamp, and the timestamp is clock information trusted by both the first network device and the second network device.

For example, the first challenge value is clock information of a TPM trusted platform of the second network device.

In a possible implementation, the first challenge value is the value of the agreed field, and the agreed field may be determined according to an Internet protocol that both the first network device and the second network device comply with.

For example, it is specified in a TLS/SSL protocol that bit data of the 128^{th} to 160^{th} bits of a ClientHello message is used as challenge value, and both the first network device and the second network device comply with the TLS/SSL protocol. In this case, after receiving the ClientHello message, the second network device obtains the bit data of the 128^{th} to 160^{th} bits as the challenge value.

In a possible implementation, the first challenge value is the trusted random number, and the trusted random number is a random number trusted by both the first network device and the second network device.

For example, the trusted random number is generated by using a blockchain (for example, a timestamp or a hash value of a latest block in the blockchain), and the first network device uses the trusted random number as the first challenge value after obtaining the trusted random number.

The timestamp, the value of the agreed field, the trusted random number, and the like are used as a random number for generating attestation information, so that trustworthiness verification in multiple manners can be implemented. Two parties of trustworthiness verification may select different manners based on an actual case to determine the challenge value, to complete the trustworthiness verification. This helps improve the security of communication between the network devices, and helps improve the security of the network devices.

With reference to the first aspect, in some implementations of the first aspect, the transmission request message includes a first random number, and the agreed field is a field corresponding to the first random number.

The first random number included in the transmission request message is used as the first challenge value, that is, original information in the transmission request message is reused. This helps simplify a structure of the transmission request message, helps reduce content carried in the transmission request message, helps the second network device parse the transmission request message, helps the first network device verify the identity and the attestation information of the second network device, helps improve the efficiency of establishing the communication connection between the network devices, helps improve the security of communication between the network devices, and helps improve the security of the network devices.

With reference to the first aspect, in some implementations of the first aspect, the attestation request information includes a storage object identifier. The storage object identifier identifies a storage object of a measurement value of the second network device. The storage object identifier is included in the first extension.

The attestation request information includes the storage object identifier, so that the first network device may obtain a measurement value stored on a specific storage object specified by the storage object identifier. This helps the second network device prepare, based on content of the attestation request information, attestation information that includes determined trustworthiness status information, helps reduce content carried in the transmission request message and the transmission response message, helps the first network device verify the identity and the attestation information of the second network device, helps improve the efficiency of establishing the communication connection between the network devices, helps improve the security of communication between the network devices, and helps improve the security of the network devices.

With reference to the first aspect, in some implementations of the first aspect, the transmission response message includes the first attestation result. The first attestation result includes the attestation result indicating that the second network device is attested to be trusted. The transmission response message further includes a parameter needed for establishing the TLS/SSL protocol-based connection.

The transmission response message includes the first attestation result of the second network device, so that after receiving the transmission response message, the first network device may obtain the first attestation result, and further determine, based on the first attestation, whether the second network device is trusted. In addition, the first network device may establish a secure communication channel with the second network device based on the parameter that is needed for establishing the TLS/SSL protocol-based connection and that is included in the transmission response message, to implement data transmission. Obtaining the transmission response message helps improve the security of communication between the network devices, and helps improve the security of the network devices.

With reference to the first aspect, in some implementations of the first aspect, the first attestation result includes one or more of identity information, trusted content, and freshness, where the identity information of a verifier indicates an identity of the verifier attesting that the second network device is trusted, the trusted content indicates content that is of the second network device and that is attested to be trusted, and the freshness indicates a time period in which the second network device is attested to be trusted.

The first attestation result includes the identity information of the verifier, the trusted content, and the freshness, so that the first network device may obtain trustworthiness attestation related information of the second network device, to directly determine, by determining whether latest trustworthiness attestation is valid, whether the second network device is trusted.

The identity of the verifier attesting that the second network device is trusted may be determined by using the identity information of the verifier. Specific trusted content that is attested in a latest trustworthiness attestation process and whether the trusted content is applicable to current trustworthiness attestation may be determined by using the trusted content. A time period in which latest trustworthiness attestation is completed may be determined by using the freshness, to determine whether the latest trustworthiness attestation is within a validity period, and determine whether trustworthiness attestation needs to be performed again. The first attestation result includes the foregoing information. This helps improve efficiency of the trustworthiness attestation, helps improve the security of communication between the network devices, and helps improve the security of the network devices.

With reference to the first aspect, in some implementations of the first aspect, the transmission response message includes the first attestation information. The first attestation information is used to verify whether the second network device is trusted. The transmission response message further includes a parameter needed for establishing the TLS/SSL protocol-based connection.

The transmission response message includes the first attestation information of the second network device, so that after receiving the transmission response message, the first network device may obtain information used to verify whether the second network device is trusted, to determine whether the second network device is trusted. In addition, the first network device may establish a secure communication channel with the second network device based on the parameter that is needed for establishing the TLS/SSL protocol-based connection and that is included in the transmission response message, to implement data transmission. Obtaining the transmission response message helps improve the security of communication between the network devices, and helps improve the security of the network devices.

With reference to the first aspect, in some implementations of the first aspect, the transmission response message includes a second extension. The second extension includes extension information supported by the second network device. The first attestation information is included in the second extension.

The first attestation information used to respond to an attestation request message is included in an extension that is specially used to store extension information and that is of the transmission response message. This helps keep an original message structure of the transmission response message, helps reduce impact of addition of the first attestation information on related parameter information for connection establishment in the transmission response message, helps simplify the transmission response message, helps the first network device parse the transmission response message, helps the first network device verify the identity and the attestation information of the second network device, helps improve the efficiency of establishing the communication connection between the network devices, helps improve the security of communication between the network devices, and helps improve the security of the network devices.

With reference to the first aspect, in some implementations of the first aspect, the first attestation information includes a second random number. The transmission response message includes a third random number. The second random number is used as the third random number.

In a possible implementation, the third random number is for anti-replay of the transmission response message.

A random number in attestation information is used as a random number for anti-replay of the transmission response message. This can simplify a message structure of the transmission response message, reduce content carried in the transmission response message, help keep the original message structure of the transmission response message, help reduce the impact of addition of the first attestation information on the related parameter information for connection establishment in the transmission response message, help simplify the transmission response message, help the first network device parse the transmission response message, help the first network device verify the identity and the attestation information of the second network device, help improve the efficiency of establishing the communication connection between the network devices, help improve the security of communication between the network devices, and help improve the security of the network devices. With reference to the first aspect, in some implementations of the first aspect, the first attestation information includes a quote and a measurement log. The quote includes a digest of the measurement log. The measurement log includes process information about trustworthiness measurement of the second network device.

The quote and the measurement log are included in the second extension.

The first attestation information includes the quote and the measurement log, and the quote is used as the digest of the measurement log, so that integrity of the measurement log can be verified. This helps prevent the first attestation information from being tampered with or lost, helps improve the security of the first network device, and helps improve the security of communication between the network devices.

With reference to the first aspect, in some implementations of the first aspect, the first attestation information further includes a measurement value. The measurement value is status information obtained through the trustworthiness measurement of the second network device.

The first attestation information includes the measurement value, that is, includes trustworthiness status information of the second network device, and the trustworthiness status information of the second network device may be obtained through an operation performed based on the process information about the trustworthiness measurement of the second network device in the measurement log. Therefore, the measurement value may be used to verify the measurement log, which helps the first network device determine whether the measurement log in the attestation information is valid, helps improve the security of the first network device, and helps improve the security of communication between the network devices.

With reference to the first aspect, in some implementations of the first aspect, the first attestation information further includes a trusted signature. The trusted signature is a signature of a trusted platform of the second network device for the measurement value.

The first attestation information includes the trusted signature, so that the first network device may verify the signature for the measurement value, to determine that the measurement value is issued by the second network device, and then perform trustworthiness verification on the second network device by using the measurement value, the quote, the measurement log, and the like, to determine whether the second network device is trusted. Implementation of this technical solution helps improve the security of the first network device, and helps improve the security of communication between the network devices.

With reference to the first aspect, in some implementations of the first aspect, the first attestation information includes a first attestation certificate. The first attestation certificate is used to verify whether the trusted platform of the second network device is trusted.

The first attestation information includes the first attestation certificate, so that after receiving the transmission response message, the first network device may determine, based on the first attestation certificate, whether the trusted computing platform of the second network device is trusted, and verify the trustworthiness status information of the second network device on a premise of determining that the trusted computing platform of the second network device is trusted. This helps ensure that the trustworthiness status information of the second network device is valid, helps improve the security of the first network device, and helps improve the security of communication between the network devices.

With reference to the first aspect, in some implementations of the first aspect, the transmission response message includes a transmission certificate. The transmission certificate is used to verify an identity of the second network device.

The first attestation certificate is used as the transmission certificate; or
the first attestation certificate and the transmission certificate are associated with each other.

Herein, that the first attestation certificate and the transmission certificate are associated with each other means that the first attestation certificate and the transmission certificate have a unique identity proof of each other.

The first attestation certificate and the transmission certificate are associated with each other, so that when the transmission certificate is lost or damaged, the first attestation certificate may be used to verify the identity of the second network device. This helps improve reliability of communication between the first network device and the second network device.

Using the first attestation certificate as the transmission certificate can simplify the structure of the transmission response message, help the first network device parse the transmission response message, help improve efficiency of the first network device in determining the identity of the second network device and determining that the second network device is trusted, help improve a rate of establishing the connection by the network devices, and help improve the security of communication between the network devices.

With reference to the first aspect, in some implementations of the first aspect, the first network device sends second attestation information or a second attestation result, where the second attestation information is used to verify whether the first network device is trusted, and the second attestation result includes an attestation result indicating that the first network device is attested to be trusted.

The second attestation result includes related information indicating that the first network device is verified to be trusted. After verifying the identity of the second network device and determining that the second network device is trusted, the first network device sends the second attestation information or the second attestation result of the first network device to the second network device. This helps the second network device verify the attestation information of the first network device, helps improve the security of the second network device, and helps improve the security of communication between the network devices.

With reference to the first aspect, in some implementations of the first aspect, before sending the second attestation information, the first network device determines, based on the transmission response message, that the second network device is trusted.

After determining that the second network device is trusted, the first network device sends the second attestation information of the first network device to the second network device, which helps improve the security of the first network device. After obtaining the attestation information of the first network device, the second network device determines whether the first network device is trusted, which helps improve the security of the second network device.

With reference to the first aspect, in some implementations of the first aspect, before sending the second attestation information, the first network device obtains a second challenge value, where the second challenge value is used to generate the second attestation information.

By obtaining the second challenge value, the first network device may obtain a request for attesting that the first network device is trusted, and further prepare trustworthiness status information of the first network device for verifying the attestation information of the first network device.

In a possible implementation, the transmission response message indicates that a request included in the transmission request message is rejected, and the transmission response message further indicates that the first network device is untrusted.

In a possible implementation, after receiving the transmission response message indicating that the transmission request is rejected, the first network device re-prepares other trustworthiness attestation information or another attestation result of the first network device, to initiate a next transmission request.

The transmission response message indicates that the second network device rejects the request included in the transmission request message, so that after receiving the transmission response message, the first network device may obtain a request rejection and a cause of the rejection, and take measures. Implementation of this technical solution helps improve the security of the first network device and the second network device, helps improve the security of communication between the network devices, and also helps maintain the first network device, the second network device, and communication between the network devices.

According to a second aspect, a communication method integrated with trustworthiness measurement is provided. The method may be performed by a second network device, or may be performed by software, hardware, a chip, or a circuit used by a second network device. This is not limited in this application. For ease of description, an example in which the method is performed by the second network device is used below for description.

The method includes: The second network device receives a transmission request message, where the transmission request message is used to request to establish a transport layer security/secure sockets layer TLS/SSL protocol-based connection, and the transmission request message is further used to request to verify whether the second network device is trusted.

The second network device sends a transmission response message in response to the transmission request message.

The transmission request message is sent, so that the second network device may obtain a request for establishing a connection and a request for attesting that the second network device is trusted, which are sent by a first network device, and the second network device may make a response based on request content. Therefore, a first network device can determine whether the second network device may establish the TLS/SSL protocol-based connection and whether the second network device is trusted. Implementation of this solution helps improve security of communication between the first network device and the second network device, helps improve security of the first network device, and helps protect security of communication data between the network devices.

With reference to the second aspect, in some implementations of the second aspect, the transmission request message includes attestation identity information. The attestation identity information is used to request to obtain first attestation information or a first attestation result. The first attestation information is used to verify whether the second network device is trusted. The first attestation result includes an attestation result indicating that the second network device is attested to be trusted.

In a possible implementation, the attestation identity information is included in an extension of the transmission request message.

The transmission request message includes the attestation identity information, so that after receiving the transmission request message, the second network device may prepare the first attestation information or the first attestation result for the first network device to verify the second network device. This helps improve the security of communication between the first network device and the second network device, helps improve the security of the first network device, and helps protect the security of the communication data between the network devices.

With reference to the second aspect, in some implementations of the second aspect, the transmission request message includes attestation request information. The attestation request information is used to request to attest that the second network device is trusted.

The transmission request message includes a first extension. The first extension includes extension information supported by the first network device. The attestation request information is included in the first extension.

The information used to request to attest that the second network device is trusted is included in an extension that is specially used to store extension information and that is of the transmission request message. This helps keep an original message structure of the transmission request message, helps reduce impact of addition of the attestation request information on information for requesting to establish the connection in the transmission request message, helps simplify the transmission request message, helps the second network device parse the transmission request message, helps the first network device verify an identity and attestation information of the second network device, helps improve efficiency of establishing a communication connection between the network devices, helps improve the security of communication between the network devices, and helps improve the security of the network devices.

With reference to the second aspect, in some implementations of the second aspect, the attestation request information includes a first challenge value. The first challenge value is used to generate first attestation information. The first attestation information is used to verify whether the second network device is trusted.

The first challenge value is any one of a timestamp, a trusted random number, and a value of an agreed field.

In a possible implementation, the first challenge value is the timestamp, and the timestamp is clock information trusted by both the first network device and the second network device.

For example, the first challenge value is clock information generated by a TPM trusted platform of the second network device.

In a possible implementation, the first challenge value is the value of the agreed field, and the agreed field may be determined according to an Internet protocol that both the first network device and the second network device comply with.

For example, it is specified in a TLS/SSL protocol that bit data of the 128^{th} to 160^{th} bits of a ClientHello message is used as challenge value, and both the first network device and the second network device comply with the TLS/SSL protocol. In this case, after receiving the ClientHello message, the second network device obtains the bit data of the 128^{th} to 160^{th} bits as the challenge value.

In a possible implementation, the first challenge value is the trusted random number, and the trusted random number is a random number trusted by both the first network device and the second network device.

For example, the trusted random number is generated by using a blockchain, and the first network device uses the trusted random number as the first challenge value after obtaining the trusted random number.

The timestamp, the value of the agreed field, the trusted random number, and the like are used as a random number for generating attestation information, so that trustworthiness verification in multiple manners can be implemented. Two parties of the trustworthiness verification may determine the challenge value based on an actual case, to complete the trustworthiness verification. This helps improve the security of communication between the network devices, and helps improve the security of the network devices.

With reference to the second aspect, in some implementations of the second aspect, the transmission request message includes a first random number, and the agreed field is a field corresponding to the first random number.

The first random number included in the transmission request message is used as the first challenge value, that is, original information in the transmission request message is reused. This helps simplify a structure of the transmission request message, helps reduce content carried in the transmission request message, helps the second network device parse the transmission request message, helps the first network device verify the identity and the attestation information of the second network device, helps improve the efficiency of establishing the communication connection between the network devices, helps improve the security of communication between the network devices, and helps improve the security of the network devices.

With reference to the second aspect, in some implementations of the second aspect, the attestation request information includes a storage object identifier. The storage object identifier identifies a storage object of a measurement value of the second network device. The storage object identifier is included in the first extension.

The attestation request information includes the storage object identifier, so that the first network device may obtain a measurement value stored on a specific storage object specified by the storage object identifier. This helps the second network device prepare, based on content of the attestation request information, attestation response information for verifying whether the second network device is trusted, helps reduce content carried in the transmission request message and the transmission response message, helps the first network device verify the identity and the attestation information of the second network device, helps improve the efficiency of establishing the communication connection between the network devices, helps improve the security of communication between the network devices, and helps improve the security of the network devices.

With reference to the second aspect, in some implementations of the second aspect, the transmission response message includes the first attestation result. The first attestation result includes the attestation result indicating that the second network device is attested to be trusted. The transmission response message further includes a parameter needed for establishing the TLS/SSL protocol-based connection.

The transmission response message includes the first attestation result of the second network device, so that after receiving the transmission response message, the first network device may obtain the first attestation result, and further determine, based on the first attestation, whether the second network device is trusted. In addition, the first network device may establish a secure communication channel with the second network device based on the parameter that is needed for establishing the TLS/SSL protocol-based connection and that is included in the transmission response message, to implement data transmission. Obtaining the transmission response message helps improve the security of communication between the network devices, and helps improve the security of the network devices.

With reference to the second aspect, in some implementations of the second aspect, the first attestation result includes one or more of identity information, trusted content, and freshness, where the identity information indicates an identity of a verifier attesting that the second network device is trusted, the trusted content indicates content that is of the second network device and that is attested to be trusted, and the freshness indicates a time period in which the second network device is attested to be trusted.

The first attestation result includes the identity information of the verifier, the trusted content, and the freshness, so that the first network device may obtain trustworthiness attestation related information of the second network device, to directly determine, by determining whether latest trustworthiness attestation is valid, whether the second network device is trusted.

The identity of the second network device may be determined by using the identity information of the verifier. Specific trusted content that is attested in a latest trustworthiness attestation process and whether the trusted content is applicable to current trustworthiness attestation may be determined by using the trusted content. A time period in which latest trustworthiness attestation is completed may be determined by using the freshness, to determine whether the latest trustworthiness attestation is within a validity period, and determine whether trustworthiness attestation needs to be performed again. This helps improve efficiency of the trustworthiness attestation, helps improve the security of communication between the network devices, and helps improve the security of the network devices.

With reference to the second aspect, in some implementations of the second aspect, the transmission response message includes the first attestation information. The first attestation information is used to verify whether the second network device is trusted. The transmission response message further includes a parameter needed for establishing the TLS/SSL protocol-based connection.

The transmission response message includes the first attestation information of the second network device, so that after receiving the transmission response message, the first network device may obtain the first attestation information of the second network device, and further determine, based on the first attestation information, whether the second network device is trusted. In addition, the first network device may establish a secure communication channel with the second network device based on the parameter that is needed for establishing the TLS/SSL protocol-based connection and that is included in the transmission response message, to implement data transmission. Obtaining the transmission response message helps improve the security of communication between the network devices, and helps improve the security of the network devices.

With reference to the second aspect, in some implementations of the second aspect, the transmission response message includes a second extension. The second extension includes extension information supported by the second network device. The first attestation information is included in the second extension.

The first attestation information used to respond to an attestation request message is included in an extension that is specially used to store extension information and that is of the transmission response message. This helps keep an original message structure of the transmission response message, helps reduce impact of addition of the first attestation information on related parameter information for connection establishment in the transmission response message, helps simplify the transmission response message, helps the first network device parse the transmission response message, helps the first network device verify the identity and the attestation information of the second network device, helps improve the efficiency of establishing the communication connection between the network devices, helps improve the security of communication between the network devices, and helps improve the security of the network devices.

With reference to the second aspect, in some implementations of the second aspect, the first attestation information includes a second random number.

The transmission response message includes a third random number. The second random number is used as the third random number.

A random number in attestation information is used as a random number for anti-replay of the transmission response message. This can simplify a message structure of the transmission response message, reduce content carried in the transmission response message, help keep the original message structure of the transmission response message, help reduce the impact of addition of the first attestation information on the related parameter information for connection establishment in the transmission response message, help simplify the transmission response message, help the first network device parse the transmission response message, help the first network device verify the identity and the attestation information of the second network device, help improve the efficiency of establishing the communication connection between the network devices, help improve the security of communication between the network devices, and help improve the security of the network devices. With reference to the second aspect, in some implementations of the second aspect, the first attestation information includes a quote and a measurement log. The quote includes a digest of the measurement log. The measurement log includes process information about trustworthiness measurement of the second network device.

The quote and the measurement log are included in the second extension.

The first attestation information includes the quote and the measurement log, and the quote is used as the digest of the measurement log, so that integrity of the measurement log can be verified. This helps prevent the first attestation information from being tampered with or lost, helps improve the security of the first network device, and helps improve the security of communication between the network devices.

With reference to the second aspect, in some implementations of the second aspect, the first attestation information further includes a measurement value. The measurement value is status information obtained through the trustworthiness measurement of the second network device.

The first attestation response information includes the measurement value, that is, the included measurement value is trustworthiness status information of the second network device, and the trustworthiness status information of the second network device may be obtained through an operation performed based on the process information about the trustworthiness measurement of the second network device in the measurement log. Therefore, the measurement value may be used to verify the measurement log, which helps the first network device determine whether the measurement log in the attestation information is valid, helps improve the security of the first network device, and helps improve the security of communication between the network devices.

With reference to the second aspect, in some implementations of the second aspect, the first attestation information further includes a trusted signature. The trusted signature is a signature of a trusted computing platform supported by the second network device for the measurement value.

The first attestation information includes the trusted signature, so that the first network device may verify the signature for the measurement value, to determine that the measurement value is issued by the second network device, and then perform trustworthiness verification on the second network device by using the measurement value, the quote, the measurement log, and the like, to determine whether the second network device is trusted. Implementation of this technical solution helps improve the security of the first network device, and helps improve the security of communication between the network devices.

With reference to the second aspect, in some implementations of the second aspect,
the first attestation information includes a first attestation certificate. The first attestation certificate is used to verify whether the trusted platform of the second network device is trusted.

The first attestation information includes the first attestation certificate, so that after receiving the transmission response message, the first network device may determine, based on the first attestation certificate, whether the trusted computing platform of the second network device is trusted, and verify the first attestation information of the second network device on a premise of determining that the trusted computing platform of the second network device is trusted. This helps ensure that the first attestation information of the second network device is valid, helps improve the security of the first network device, and helps improve the security of communication between the network devices.

With reference to the second aspect, in some implementations of the second aspect, the transmission response message includes a transmission certificate. The transmission certificate is used to verify an identity of the second network device.

The first attestation certificate is used as the transmission certificate; or
the first attestation certificate and the transmission certificate are associated with each other.

The first attestation certificate and the transmission certificate are associated with each other, so that when the transmission certificate is lost or damaged, the attestation certificate may be used to verify the identity of the second network device. This helps improve reliability of communication between the first network device and the second network device.

Herein, that the first attestation certificate and the transmission certificate are associated with each other means that the first attestation certificate and the transmission certificate have a unique identity proof of each other.

Using the first attestation certificate as the transmission certificate can simplify the structure of the transmission response message, help the first network device parse the transmission response message, help improve efficiency of the first network device in determining the identity of the second network device and determining that the second network device is trusted, help improve a rate of establishing the connection by the network devices, and help improve the security of communication between the network devices.

With reference to the second aspect, in some implementations of the second aspect, the second network device receives second attestation information or a second attestation result, where the second attestation information is used to verify whether the first network device is trusted, and the second attestation result includes an attestation result indicating that the first network device is attested to be trusted.

The second attestation result includes related information indicating that the second network device is verified to be trusted. After verifying the identity of the second network device and determining that the second network device is trusted, the first network device sends the second attestation information or the second attestation result of the first network device to the second network device. This helps the second network device verify the attestation information of the first network device, helps improve the security of the second network device, and helps improve the security of communication between the network devices.

In a possible implementation, the transmission response message indicates that a request included in the transmission request message is rejected, and the transmission response message further indicates that the first network device is untrusted.

The transmission response message indicates that the second network device rejects the request included in the transmission request message, so that after receiving the transmission response message, the first network device may obtain a request rejection and a cause of the rejection, and take measures. Implementation of this technical solution helps improve the security of the first network device and the second network device, helps improve the security of communication between the network devices, and also helps maintain the first network device, the second network device, and communication between the network devices.

According to a third aspect, a communication apparatus is provided. The communication apparatus includes a receiving module and a sending module.

The sending module is configured to send a transmission request message, where the transmission request message is used to request to establish a transport layer security/secure sockets layer TLS/SSL protocol-based connection, and the transmission request message is further used to request to verify whether a second network device is trusted.

The receiving module is configured to receive a transmission response message, where the transmission response message is used to respond to the transmission request message.

With reference to the third aspect, in some implementations of the third aspect, the sending module is further configured to send second attestation information or a second attestation result, where the second attestation information is used to verify whether a first network device is trusted, and the second attestation result includes an attestation result indicating that the second network device is attested to be trusted.

With reference to the third aspect, in some implementations of the third aspect, the communication apparatus further includes a processing module.

The processing module is configured to determine, based on the transmission response message, that the second network device is trusted.

With reference to the third aspect, in some implementations of the third aspect, the processing module is further configured to obtain a second challenge value, where the second challenge value is used to generate the second attestation information, and the second attestation information is used to verify whether the first network device is trusted.

According to a fourth aspect, a communication apparatus is provided. The communication apparatus includes a receiving module and a sending module.

The receiving module is configured to receive a transmission request message, where the transmission request message is used to request to establish a transport layer security/secure sockets layer TLS/SSL protocol-based connection, and the transmission request message is further used to request to verify whether a second network device is trusted.

The sending module is configured to send a transmission response message.

With reference to the fourth aspect, in some implementations of the fourth aspect, the receiving module is further configured to receive second attestation information or a second attestation result of a first network device, where the second attestation information is used to verify whether the first network device is trusted, and the second attestation result includes an attestation result indicating that the first network device is attested to be trusted.

According to a fifth aspect, a communication device is provided, including at least one processor, where the at least one processor is coupled to at least one memory, the at least one memory is configured to store a computer program or instructions, and the at least one processor is configured to invoke the computer program or instructions from the at least one memory and run the computer program or instructions, so that the communication device performs the method according to any one of the first aspect or the possible implementations of the first aspect.

According to a sixth aspect, a communication device is provided, including at least one processor, where the at least one processor is coupled to at least one memory, the at least one memory is configured to store a computer program or instructions, and the at least one processor is configured to invoke the computer program or instructions from the at least one memory and run the computer program or instructions, so that the communication device performs the method according to any one of the second aspect or the possible implementations of the second aspect.

According to a seventh aspect, a computer-readable storage medium is provided. The computer-readable storage medium stores computer instructions; and when the computer instructions are run on a computer, the method according to any one of the first aspect or the possible implementations of the first aspect is performed.

According to an eighth aspect, a computer-readable storage medium is provided. The computer-readable storage medium stores computer instructions; and when the computer instructions are run on a computer, the method according to any one of the second aspect or the possible implementations of the second aspect is performed.

According to a ninth aspect, a computer program product is provided. The computer program product includes computer program code; and when the computer program code is run on a computer, the method according to any one of the first aspect or the possible implementations of the first aspect is performed.

According to a tenth aspect, a computer program product is provided. The computer program product includes computer program code; and when the computer program code is run on a computer, the method according to any one of the second aspect or the possible implementation of the second aspect is performed.

According to an eleventh aspect, a chip is provided, including a processor configured to read instructions stored in a memory. When the processor executes the instructions, the chip is enabled to implement the method according to any one of the first aspect or the possible implementations of the first aspect.

According to a twelfth aspect, a chip is provided, including a processor configured to read instructions stored in a memory. When the processor executes the instructions, the chip is enabled to implement the method according to any one of the second aspect or the possible implementations of the second aspect.

### BRIEF DESCRIPTION OF DRAWINGS

FIG. 1 is a diagram of a TCP/IP architecture applicable to an embodiment of this application;
FIG. 2 is a diagram of an architecture that is of a TLS/SSL protocol and that is applicable to an embodiment of this application;
FIG. 3 is a diagram of a TLS/SSL protocol-based communication method according to an embodiment of this application;
FIG. 4 is a diagram of a communication method integrated with trustworthiness measurement according to an embodiment of this application;
FIG. 5 is a diagram of another communication method integrated with trustworthiness measurement according to an embodiment of this application;
FIG. 6 is a diagram of still another communication method integrated with trustworthiness measurement according to an embodiment of this application;
FIG. 7 is a diagram of still another communication method integrated with trustworthiness measurement according to an embodiment of this application;
FIG. 8 is a diagram of still another communication method integrated with trustworthiness measurement according to an embodiment of this application;
FIG. 9 is a diagram of a communication apparatus integrated with trustworthiness measurement according to an embodiment of this application; and
FIG. 10 is a diagram of a communication device integrated with trustworthiness measurement according to an embodiment of this application.

### DESCRIPTION OF EMBODIMENTS

The following describes the technical solutions of this application with reference to the accompanying drawings.

The technical solutions of embodiments of this application may be applied to various communication systems, for example, a global system for mobile communications (global system for mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, or a 5th generation (5th generation, 5G) system.

A terminal device in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

A network device in embodiments of this application may be a device configured to communicate with the terminal device. The network device may be a base transceiver station (base transceiver station, BTS) in the global system for mobile communications (global system for mobile communications, GSM) or the code division multiple access (code division multiple access, CDMA) system, may be a NodeB (NodeB, NB) in the wideband code division multiple access (wideband code division multiple access, WCDMA) system, may be an evolved NodeB (evolved NodeB, eNB or eNodeB) in the LTE system, or may be a radio controller in a cloud radio access network (cloud radio access network, CRAN) scenario. Alternatively, the network device may be a relay station, an access point, a vehicle-mounted device, a wearable device, a network device in the 5G network, a network device in the PLMN, or the like. This is not limited in embodiments of this application.

A first network device, a second network device, a client, and a server in embodiments of this application may be the foregoing terminal device or network device. Functions of the first network device and the second network device may be implemented by software, or may be implemented by hardware. This is not limited in embodiments of this application.

In embodiments of this application, unless otherwise specified, a quantity of nouns indicates "a singular noun or a plural noun", namely, "one or more". "At least one" means one or more, "a plurality of" means two or more, and similarly, "a plurality of types" in "one or more types" means two or more types. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one (piece) of a, b, or c represents: a, b, c, a and b, a and c, b and c, or a, b, and c, where a, b, and c may be singular or plural.

Transmission control protocol/internet protocol (transmission control protocol, TCP/internet protocol, IP) is a complete set of standard network connection protocol used on a network. TCP/IP provides a point-to-point connection mechanism to standardize how data should be encapsulated, addressed, transmitted, routed, and received at a destination. It abstracts a software communication process into four abstract layers and implements different communication protocols through a protocol stack.

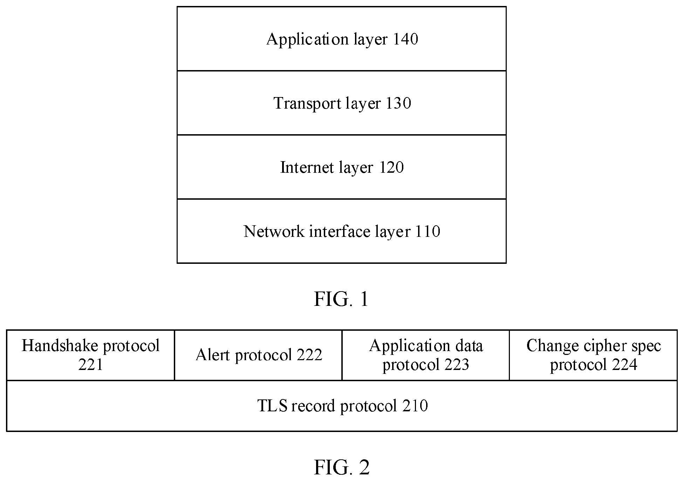

FIG. 1 shows a TCP/IP architecture. The protocol has four layers in total: a network access layer 110, an internet layer 120, a transport layer 130, and an application layer 140.

The network access layer (network access(link) layer) 110: As a bottom layer of a TCP/IP model, it is also referred to as a network interface layer, and includes a protocol capable of implementing communication with a physical network with TCP/IP. The TCP/IP standard does not define a specific network interface protocol. Instead, the TCP/IP standard aims to provide flexibility to adapt to various network types, such as a local area network (local area network, LAN), a metropolitan area network (metropolitan area network, MAN), and a wide area network (wide area network, WAN).

The internet layer (internet layer) 120: It is also referred to as an Internet layer, and is mainly used to process a packet from the transport layer 130, to generate a data packet from the packet, select a path between different networks for the data packet, and finally send the data packet from a source host to a destination host.

The transport layer (transport layer) 130: It is also referred to as a host-to-host layer, and is responsible for reliable end-to-end communication between hosts.

The application layer (application layer) 140: The application layer is used by most common network-related programs to communicate with other programs through the network. The application layer is used to provide network services, such as file transfer, remote login, a domain name service, and simple network management.

A secure sockets layer (secure sockets layer, SSL) protocol is applied between the transport layer 130 and the application layer 140, and establishes a secure channel over TCP to ensure security for application data transmitted through TCP. A transport layer security (transport layer security, TLS) protocol is designed based on the SSL protocol, and is used to provide secure data transmission services for all TCP-based network applications.

FIG. 2 shows an architecture of the TLS/SSL protocol. The protocol is mainly divided into two layers: The bottom layer is a TLS record protocol (record protocol), and the upper layer is a TLS handshake protocol (TLS handshake protocol). The TLS record protocol is mainly responsible for encrypting a message with a symmetric cipher.

The TLS handshake protocol is mainly classified into a handshake protocol (handshake protocol), an alert protocol (alert protocol), an application data protocol (application protocol), and a change cipher spec protocol (change cipher spec protocol). The handshake protocol is responsible for generating a shared key needed in a communication process and performing identity authentication. The handshake protocol implements communication through public key cryptography or a Diffie-Hellman key exchange technology, to prevent communication data from being intercepted.

The TLS/SSL protocol provides the following main security services.
(1) Server authentication: It allows a user to verify an identity of a server. A client verifies a certificate from the server to authenticate a real identity of the server and obtain a public key of the server.
(2) Client authentication: It allows the server to verify an identity of the client.
(3) Encrypted session: All packets sent between the client and the server are encrypted, and whether the packets are tampered with is detected.

Trusted computing (trusted computing, TC) is a technology that aims to enable a computer to always run as expected. "Trusted" emphasizes that a behavior result is predictable and controllable. The trusted computing is enforced by computer hardware and software. A trusted technology for a computing system starts with a root of trust and develops to trusting a hardware platform, an operating system, and an application. Management and authentication strength of each layer corresponds to trustworthiness of each layer. Further, the trustworthiness is extended to the complete computer system, and a protection measure is taken to ensure integrity of computer resources and expected computer behavior, to improve the trustworthiness of the computer system.

At present, the trusted computing mainly includes two different research directions. One is to use a physical anti-tampering device to ensure that a trusted computing base (trusted computing base, TCB) is trusted and use the TCB as a trusted anchor to build a trusted computing architecture for the computer system. The other one is to build an isolated computing system to ensure that a running environment of specific sensitive software code is trusted. Based on this idea, a universal trusted execution environment (trusted execution environment, TEE) based on a special security mode of a central processing unit (central processing unit, CPU) is developed.

Remote attestation (remote attestation, RA) is one of key technologies in an overall solution for the trusted computing, and is used to determine whether a device is trusted. The remote attestation enables a user or another person to detect a change of a computer of the user. In this way, private information or an important command is not sent to an insecure computer or a security-compromised computer. In a remote attestation mechanism, a certificate is generated by using hardware, to declare which software is running. The user may send the certificate to a remote party to indicate that the computer of the user is not tampered with. The remote attestation is usually combined with public-key encryption, to ensure that sent information can be read only by a program that sends an attestation request rather than another eavesdropper. These restrictions are used to achieve objectives of enhancing terminal trustworthiness and improving system security. Currently, a remote attestation technology mainly uses the following several solutions:
(1) Privacy certificate authority (privacy certificate authority, PCA): A challenger sends a challenge to a trusted computing module (trusted platform module, TPM), to be specific, requests content of one or more platform configuration registers (platform configuration registers, PCRs). The platform collects a storage measurement log file, and the TPM signs the content of the PCR with an identity key. The platform sends, to a certificate authority (certificate authority, CA), a message for requesting a platform certificate, and then sends the platform certificate, the storage measurement log, and the signed PCR to the challenger. The challenger attests the request, to be specific, recalculates a storage measurement log and compares the storage measurement log with a received PCR value to verify the platform certificate and a signature.
(2) Direct anonymous attestation (direct anonymous attestation, DAA): The TPM selects one piece of secret information, and obtains, through a secure zero-knowledge proof, a DAA certificate issued by a DAA issuer (issuer) for the secret information. A verifier (verifier) attests, through the "zero-knowledge proof", that the TPM has a trusted and valid DAA certificate.
(3) Intel software guard extensions (Intel software guard extensions, Intel SGX) cross-platform verification: An SGX technology enables a developer to partition an application into a hardened enclave (enclave) of a CPU or an executable protection area in a memory, to improve security even on an attacked platform.

An Intel SGX solution is approximately as follows: An authenticated enclave (enclave) obtains current information to generate a report structure, generates a tag by using a report key of a quote enclave (quote enclave), and sends the report structure and the tag to the quote enclave. The quote enclave verifies whether the authenticated enclave and the quote enclave are on a same platform (for example, a same device), encapsulates the received report structure into a quote structure, and signs the quote structure by using a signature key. A target enclave verifies whether a quote is generated by a reliable Intel processor.

Before embodiments are formally described, some terminologies that may be used in embodiments are first described.
1. Anti-replay (anti-replay): is also referred to as anti-replay, and is mainly used to prevent a hacker from injecting or tampering with a network data packet from a source to a destination. An anti-replay protocol uses a unidirectional security association to create a secure connection between two nodes in a network. After the secure connection is created, the anti-replay protocol uses a data packet sequence number to defend against a replay attack. Specifically, when the source sends a message, the source adds a sequence number to a data packet. The sequence number starts from 0 and is incremented by 1 for each subsequent data packet. The destination uses a "sliding window" to maintain a sequence number record of a valid received packet, and rejects all data packets whose sequence numbers are smaller than a minimum value in the sliding window (that is, the sequence numbers are excessively old) or whose sequence numbers are already in the sliding window (that is, the sequence numbers are repeated/replayed). If a received data packet is verified, the sliding window is updated. If the sliding window is full, a smallest sequence number is removed from the window.
2. Key (key): is also referred to as an encryption key. In cryptography, the key is secret information used to implement cryptographic applications such as encryption, decryption, and integrity verification. In symmetric cryptography (or key cryptography), a same key is used for encryption and decryption. Therefore, the key needs to be kept confidential. In asymmetric cryptography (or public key cryptography), different keys are used for encryption and decryption. Generally, one is public, which is referred to as a public key, and the other is secret, which is referred to as a private key. The public key and the private key have a mathematical relationship, which are referred to as a key pair (key pair).
3. Master (master key/master secret): A key used only once in each communication is referred to as a session key. Compared with the session key, a key that is repeatedly used is referred to as a master key.
4. Session key (session key): is referred to as a data encryption key or a working key, and is an encryption and decryption key randomly generated to ensure a secure communication session between a user and a device or between two devices. The session key may be obtained through negotiation between communication users. The session key is usually generated dynamically and only when session data needs to be encrypted. The session key is also a symmetric key because the same key is used for encryption and decryption.
5. Pre-shared key (pre-shared key, PSK): is a symmetric key shared through a secure channel before use.
6. Stream cipher (stream cipher): is also referred to as stream encryption or data stream encryption, and is a symmetric encryption algorithm. Two encryption and decryption parties use a same pseudo-random encrypted data stream (pseudo-random stream) as a key. Plaintext data is correspondingly encrypted with a key data stream in sequence to obtain a ciphertext data stream.
7. Peer entity: is an entity that executes a peer protocol. The entity is an abstract concept, and may be understood as a program that executes a protocol.
8. Hash function (hash function): is also referred to as a hash algorithm or hash function, and is a method for creating a small digital fingerprint from any type of data. The hash function compresses a message or data into a digest to reduce a data amount and make a data format fixed. This function remixes data and recreates a fingerprint referred to as hash values (hash values, hash codes, hash sums, or hashes).
9. Enclave (enclave): is an area for separating and encrypting code data, where the code data is decrypted only within a processor. The enclave is a part of an application and has full access to a memory of the application.
10. Quote enclave (quoting enclave, QE): An enclave provided by Intel is referred to as a quote enclave. When an enclave system is running, only the quote enclave may access an asymmetric key specific to a device.
11. nonce: In information security, a nonce is a number that can be used only once in encrypted communication. In an authentication protocol, the nonce is usually a random or pseudo-random number to avoid replay attacks. The nonce is also used for stream ciphers to ensure security. If more than one message needs to be encrypted with the same key, the nonce is needed to ensure that different messages are different from a keystream encrypted with the key.
12. Keystream (keystream): In cryptography, it is a string stream of random or pseudo-random bytes, and is used to generate encrypted information in combination with plaintext data. To obtain the keystream, a data stream may be usually generated through a random or pseudo-random process. The keystream is used for one-time cipher books and most encryption algorithms.
13. Diffie-Hellman key exchange (Diffie-Hellman key exchange ephemeral, DHE): It is a security protocol that allows two communication parties to create a key through an insecure channel without advance information of each other. This key may be used as a symmetric key to encrypt communication content in subsequent communication.
14. Elliptic curve Diffie-Hellman key exchange (elliptic curve Diffie-Hellman key exchange ephemeral, ECDHE): is an anonymous key agreement protocol, a variant of DHE, and uses elliptic curve cryptography to enhance performance and security. In this protocol, the two communication parties use a public key and private key pair established through elliptic curve cryptography to establish secure shared encrypted data in an insecure channel, which can provide forward security.
15. Trusted platform module (TPM): is a chip planted inside a computer to provide a root of trust for the computer.
16. TPM software stack (TPM software stack, TSS): is a software specification that provides a standard application programming interface (application programming interface, API) for accessing a TPM function. An application developer may use the software specification to develop an interoperable client application to implement stronger tamper-resistant computing.
17. Digital certificate (digital certificate): is also referred to as a public key certificate (public key certificate) or an identity certificate (identity certificate), and is an electronic document for public key infrastructure, to attest an identity of a public key owner. The document includes public key information, owner identity information (a subject), and a digital signature of a digital certificate authority (an issuer) on the document, to ensure that overall content of the document is correct. With the document, the owner may reveal the identity to a computer system or another user, so that the owner is trusted by the computer system or the another user and authorized to access or use some sensitive computer services. The computer system or the another user may verify the content of the certificate by using a specific program, where the content includes whether the certificate expires and whether the digital signature is valid. If the computer system or the another system trusts the issuing authority, the computer system or the another user may trust a key on the certificate, and perform reliable communication with the owner through public-key encryption.
   In short, the authority applies, by using a private key of the authority, a digital signature to a public key of a person (or an organization) on which authorization needs to be performed, and generates a certificate. In other words, the essence of the certificate is to apply the digital signature to the public key.
18. Certificate signing request (certificate signing request, CSR): is a message sent by an applicant to a certificate authority to apply for a public key certificate, and usually includes a public key for certificate issuing, identifying information (such as a domain name), and integrity protection (such as a digital signature). When the certificate is signed, the two parties are both inserted into the certificate.
19. Certificate authority (CA): is also referred to as an e-commerce authentication center or an e-commerce authentication and authorization authority, and is an authority responsible for issuing and managing a digital certificate; and as a trusted third party in an e-commerce transaction, is responsible for verifying trustworthiness of a public key in a public key system.
20. Trusted execution environment (TEE): is a secure area in a central processing unit, and can ensure that a program and a material in the TEE are protected in terms of confidentiality and integrity. The TEE is an isolated execution environment, and may provide secure features such as isolated execution, integrity of an application that is executed with the TEE, and confidentiality of assets of the application. In a general term, the TEE provides more secure execution space for execution of trusted software, is more secure than an operating system, and has more functionality than a secure element.
21. Direct anonymous attestation (DAA): may be regarded as a group signature without a characteristic that the signature can be enabled, that is, anonymity is irrevocable. In addition, DAA allows use of pseudonym, that is, for each signature, the user (reaching an agreement with a recipient of the signature) may determine whether the signature can be linked to another signature. DAA also allows detection of a public key: If a DAA key is extracted and published from the TPM, the verifier may detect that the signature is generated with the key.
22. Endorsement key (endorsement key, EK): is a public and private key pair written by a manufacturer during manufacturing of the TPM. The EK is a unique identifier of the TPM. However, in consideration of user privacy, the EK cannot be directly for encrypting and signing data. One of main functions of the EK is to generate an attestation identity key, where the attestation identity key is for replacing the EK to encrypt and sign the data.
23. Attestation identity key (attestation identity key, AIK): may be for encrypting and signing data to attest existence of the TPM. The AIK is bound to the EK. However, a device other than a platform on which the TPM is located cannot obtain a correspondence between the AIK and the EK. This ensures the user privacy.
24. Trustzone (trustzone): is a security solution. Trustzone provides an independent secure operating system and hardware virtualization technology to provide a trusted execution environment for security of a mobile phone. Trustzone enables two independent execution environments to run on a same set of hardware systems, where the two execution environments are respectively referred to as a secure world (secure world) and a normal world (normal world).
25. Trusted cryptography module (trusted cryptography module, TCM): is a module of a trusted computing platform, provides a cryptographic computing function for the trusted computing platform, and has protected storage space.

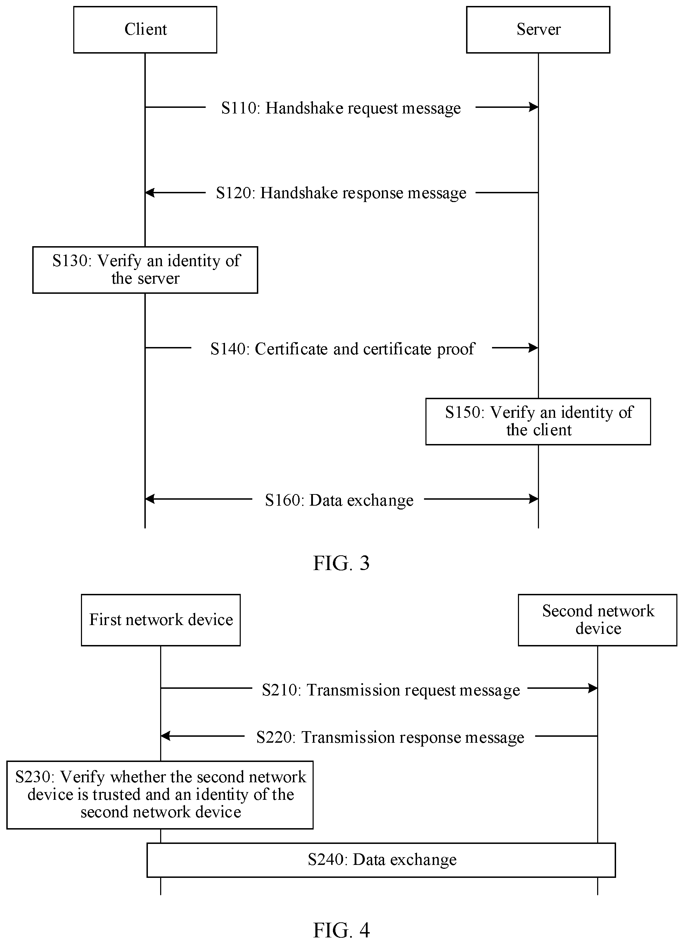

FIG. 3 is a diagram of a TLS/SSL protocol-based communication method according to an embodiment of this application.

S110: A client sends a handshake request message.

In some possible embodiments, the handshake request message includes one or more of the following information: a protocol version number, a cipher suite, a client random number, a compression method, key sharing, a signature algorithm, a PSK key exchange mode, a pre-shared key, and an extension. The handshake request message is used to send a function supported by the client to a server.

Herein,
the protocol version number indicates a TLS protocol version number supported by the client.

The cipher suite indicates a cipher suite supported by the client.

The client random number is used to generate a symmetric key and prevent a replay attack.

The compression method indicates a compression method supported by the client.

The key sharing indicates whether the client includes DHE or ECDHE encrypted sharing.

The signature algorithm indicates a signature algorithm supported by the client.

The PSK key exchange mode indicates a key exchange mode on the client that can be used with a PSK.

The pre-shared key indicates a symmetric key identifier that may be recognized by the client.

The extension indicates extension information supported by the client.

The handshake request message is sent, so that the server may obtain, based on the received handshake request message, one or more of the protocol version number supported by the client, the cipher suite supported by the client, the compression algorithm available to the client, the extension supported by the client, and other information. The server may generate a handshake response message based on the foregoing information.

S120: The server sends the handshake response message.

In some embodiments, the handshake response message includes one or more of the following information: key sharing, a pre-shared key, an encrypted extension, a server random number, a certificate request, a certificate, a certificate proof, a completion indication, and application data. The handshake response message is used to send a connection parameter selected by the server to the client.

Herein,
the key sharing indicates that the server uses a DHE algorithm or an ECDHE algorithm for encryption and certificate-based authentication.

The pre-shared key includes a shared key selected by the server.

The encrypted extension indicates extension information supported by the server.

The server random number is used to generate a symmetric key and prevent a replay attack.

The certificate request indicates a certificate requested by the server from the client.

The certificate includes a certificate of the server.

The certificate proof indicates a proof of the certificate of the server.

The completion indication indicates that the server has completed preparation for transmission of the application data.

The application data indicates that the server is qualified to send the application data to the client.

In some embodiments, the server calculates a pre-master key by using the ECDHE algorithm, and generates a master key by using the client random number, the server random number, and the pre-master key.

The server encrypts the encrypted extension, the certificate request, the certificate, the certificate proof, the completion indication, and the application data with the generated master key.

In some embodiments, the server does not select the pre-shared key, and the server may provide one or more of the key sharing, the signature algorithm, and the cipher suite in the received handshake request message for the client to verify the server.

In some embodiments, the server selects the pre-shared key, and the server selects a key establishment mode based on the PSK key exchange mode included in the received handshake request message.

S130: The client verifies an identity of the server.

In some embodiments, the client verifies the identity of the server after decrypting the handshake response message.

In an embodiment, the client calculates a pre-master key by using the ECDHE algorithm, generates a master key by using the client random number, the server random number, and the pre-master key, and decrypts the handshake response message by using the generated master key. The client obtains the certificate and the certificate proof of the server based on the decrypted handshake response message. After verifying that the certificate and the certificate proof of the server are correct, the client establishes a trust in the server.

S140: The client sends the certificate and a certificate proof.

In some embodiments, the handshake response message includes the certificate request. After receiving the certificate request and establishing the trust in the server, the client sends the certificate and the certificate proof of the client to the server.

S150: The server verifies an identity of the client.

The server verifies the identity of the client based on the received certificate and certificate proof of the client.

S160: The client performs data exchange with the server.

In some embodiments, the client and the server verify the identity of each other, and perform data exchange after confirming that the identities are correct.

In some embodiments, the client and the server perform data exchange after encrypting the application data with the master key.

In the foregoing TLS/SSL protocol-based communication method, only security of a communication process between the server and the client is considered, and whether the two communication parties are currently in a trusted execution state is not considered.

With reference to FIG. 4 to FIG. 8, the following describes how to introduce a trustworthiness measurement related parameter to the TLS/SSL protocol to determine whether a measured party is in a trusted execution state in the technical solutions provided in this application, to improve security of a network and a device.

FIG. 4 shows a communication method integrated with trustworthiness measurement according to an embodiment of this application.

S210: A first network device sends a transmission request message.

The transmission request message is used to request to establish a transport layer security/secure sockets layer TLS/SSL protocol-based connection. The transmission request message is further used to request to verify whether a second network device is trusted.

In some embodiments, the first network device has not been connected to the second network device, and the first network device sends the transmission request message to the second network device.

In some embodiments, the first network device has ever been connected to the second network device, but the second network device does not store a parameter for connection to the first network device and data transmission with the first network device, and the first network device sends the transmission request message to the second network device.

In some embodiments, the transmission request message includes two types of information having mutually independent information structures. The two types of information are respectively used to request to attest that the second network device is trusted and request to establish the TLS/SSL protocol-based connection to the second network device. After receiving the transmission request message, a receiver of the transmission request message may separately obtain content of the two types of information.

In some other embodiments, the transmission request message includes two types of information that have overlapping content. For example, a portion of content of first information is included in second information. The overlapping portion of the two types of information does not affect implementation of respective information functions of the two types of information. After parsing the transmission request message, a receiver of the transmission request message may separately obtain the two types of information, to obtain a request for attesting that the second network device is trusted and a request for establishing the TLS/SSL protocol-based connection to the second network device, and make a response.

Sending the transmission request message to the second network device helps the first network device obtain first attestation information of the second network device to determine whether the second network device is trusted, and also helps the first network device request to establish the TLS/SSL protocol-based connection to the second network device to perform data exchange through an established secure communication channel.

In some embodiments, the transmission request message includes attestation identity information. The attestation identity information is used to request to obtain the first attestation information (attestation information) or a first attestation result (attestation result). The first attestation information is used to verify whether the second network device is trusted. The first attestation result includes a result indicating that the second network device is attested to be trusted.

In an embodiment, a flag bit is set in the transmission request message. The flag bit is used to store the attestation identity information.

Attestation information may also be referred to as attestation evidence (attestation evidence) or attestation data (attestation data), and is information that is generated by the second network device and that includes data such as a measurement value of software and/or hardware of the network device.

In some embodiments, the first attestation information includes a quote (quote) and a measurement log (event_log). The quote is a digest of the measurement log, and is used to verify whether content of the measurement log is tampered with. The measurement log includes a measurement record of the software and/or the hardware of the second network device.

In an embodiment, the quote is a hash value of the measurement log, and full text of the measurement log may be restored by using the hash value to compare with the measurement log included in the attestation information, to verify the attestation data.

In an embodiment, network function service consumer supports a TPM trusted platform, the attestation information includes the quote and the measurement log, the quote includes an identifier of a platform configuration register, a signature of the identifier of the PCR, and the digest of the measurement log, and the measurement log includes a measurement record of software and/or hardware of the network function service consumer.

In some embodiments, the first attestation information may include one or more of the following information:
a running status, a health degree, security-related configuration or construction information, hardware, firmware, software, a file system, an attestation environment identity, a trusted execution environment, data integrity, and a PCR value of an attester.

In some embodiments, the first attestation result includes one or more of identity information, trusted content, and freshness (freshness), where the identity information indicates an identity of a verifier attesting that the second network device is trusted, the trusted content indicates content that is of the second network device and that is attested to be trusted, and the freshness indicates a time period in which the second network device is attested to be trusted.

In some embodiments, the first attestation result may be sent by the second network device to the first network device.

In some embodiments, a trusted third party stores the first attestation result. When the first network device requests to verify whether the second network device is trusted, the trusted third party may send the first attestation result to the first network device.

In some embodiments, the first attestation result may include one or more of the following information:
configuration (configuration): the verifier verifies a configuration of the attester;
executable file (executables): the verifier verifies a real-time file, a script, and/or other content loaded into a memory that are/is of the attester;
file system (file-system): the verifier verifies a file system of the attester;
hardware (hardware): the verifier verifies hardware and firmware that can sign and run a program of the attester;
attestation environment identity (instance-identity): the verifier verifies an attestation environment identity of the attester, for example, an AIK of the TPM;
runtime-opaque (runtime-opaque): the verifier verifies opaque of the verifier from the outside of the memory of the attester;
source data (sourced-data): the verifier verifies integrity of data used by the attester; and
storage-opaque (storage-opaque): the verifier verifies that the attester can encrypt a permanent memory.

Because a data amount of identity information may be far less than a data amount of challenge value, including the attestation identity information in the transmission request message helps reduce an amount of data carried in the transmission request message, and helps simplify content of the transmission request message. Trustworthiness attestation is triggered through the identity information, so that the attester may generate the attestation information in an agreed manner. This helps the attester select, based on an actual case, a manner of generating the attestation information, and helps improve security of a communication process and security of two communication parties.

In some embodiments, the transmission request message includes attestation request information. The attestation request information is used to request to attest that the second network device is trusted.

The attestation request information is included in the transmission request message.

In some embodiments, all content of the attestation request information is included in a specific field of the transmission request message.

In some other embodiments, content of the attestation request information is separately included in at least two fields of the transmission request message.

In some embodiments, the attestation request information is included in a field that is specially used to store extension information and that is of the transmission request message.

In some other embodiments, the attestation request information is included in a field that is not specially used to store extension information and that is of the transmission request message.

For example, a field is added to a tail of the transmission request message to store the attestation request information.

The attestation request information is included in the transmission request message, so that after receiving the transmission request message, the second network device may further obtain the attestation request information by parsing the transmission request message. This embodiment of this application helps the second network device recognize and process the transmission request information, helps improve efficiency of establishing a trust relationship between the first network device and the second network device, and helps improve extensibility, compatibility, and flexibility of the communication method in this embodiment of this application.

In some embodiments, the transmission request message includes a first extension. The first extension includes extension information supported by the first network device. The attestation request information is included in the first extension.

The attestation request information is included in the field (the first extension) that is specially used to store the extension information and that is of the transmission request message. This helps keep an original structure of the transmission request message unchanged, helps the second network device recognize and process first request information, and helps improve efficiency of establishing a trust relationship between the first network device and the second network device.

In some embodiments, the attestation request information includes a first challenge value (challenge data). The first challenge value is used to generate the first attestation information. The first attestation information is used to verify whether the second network device is trusted.

The first challenge value is any one of a timestamp, a trusted random number, and a value of an agreed field.

The attestation request message includes the first challenge value, so that after obtaining the request message, the receiver of the attestation request message may generate attestation information based on the first challenge value, for verifying whether the receiver is trusted.

In some embodiments, the transmission request message includes a first random number. The first random number is for anti-replay of the transmission request message. The agreed field is a field corresponding to the first random number.

The first random number in the transmission request message is reused. This helps simplify a data structure of the transmission request message, improves efficiency of receiving, sending, and processing the transmission request message, and helps improve the efficiency of establishing the trust relationship between the first network device and the second network device.

In some embodiments, the transmission request message includes a first extension. The first extension indicates extension information supported by the first network device. The attestation request information includes a storage object identifier. The storage object identifier identifies a storage object of a measurement value of the second network device. The storage object identifier is included in the first extension.

The storage object identifier of the attestation request information is included in the first extension of the transmission request message. This helps keep an original structure of the transmission request message unchanged, helps the second network device recognize and process first request information, helps improve efficiency of receiving, sending, and processing the transmission request message, and helps improve the efficiency of establishing the trust relationship between the first network device and the second network device.

S220: The second network device sends a transmission response message.

The transmission response message is used to respond to the transmission request message sent by the first network device.

In some embodiments, the second network device may send, to the first network device based on an agreed trigger mechanism, the attestation information used to verify whether the second network device is trusted.

In some embodiments, the trigger mechanism is periodic triggering based on agreed time or triggering in response to a specific event.

In some embodiments, after receiving the transmission request message, the second network device triggers an action of sending the transmission response message.

In some embodiments, the second network device rejects the request of the first network device after receiving the transmission request message, and the transmission response message indicates that the second network device rejects the request included in the transmission request message.

In some embodiments, the second network device rejects the request of the first network device after receiving the transmission request message, the transmission response message indicates that the second network device rejects the request included in the transmission request message, and the transmission request message includes a cause for rejecting the request.

In some embodiments, the second network device accepts the request of the first network device after receiving the transmission request message, and the transmission response message includes the first attestation information of the second network device and a parameter needed for establishing the TLS/SSL-based connection.

In an embodiment, the transmission response message includes a measurement value obtained through trustworthiness measurement of the second network device and an encryption key used during data transmission with the first network device.

In some embodiments, the transmission response message includes two types of information having independent information structures. For example, first information includes the parameter needed for establishing the TLS/SSL-based connection, and second information includes trustworthiness status information of the second network device. After receiving the transmission response message, a receiver of the transmission response message may separately obtain content of the two types of information.

In some other embodiments, the transmission response message includes two types of information that have overlapping content. For example, a portion of content of first information is included in second information. The overlapping portion of the two types of information does not affect implementation of respective information functions of the two types of information. After parsing the transmission response message, the receiver of the transmission response message may separately obtain the two types of information, to obtain status information of the second network device and the parameter needed for establishing the TLS/SSL connection.

The second network device sends the transmission response message, so that the first network device obtains a reply of the second network device to the request included in the transmission request message. When the second network device accepts the request of the first network device, the first network device may verify, based on the information included in the transmission response message, an identity of the second network device and whether the second network device is trusted.

In some embodiments, the transmission response message includes the first attestation result. The first attestation result includes the result indicating that the second network device is attested to be trusted. The transmission response message further includes the parameter needed for establishing the TLS/SSL protocol-based connection.

The first attestation result may include related content of trustworthiness attestation completed by the second network device, for example, information such as the identity of the verifier, attestation time, attestation content, and a validity period. When it is determined that the first attestation result is within the validity period, whether the second network device is trusted may be directly determined by using the first attestation result.

In some embodiments, the first attestation result includes one or more of the identity information, the trusted content, and the freshness, where the identity information indicates the identity of the verifier attesting that the second network device is trusted, the trusted content indicates the content that is of the second network device and that is attested to be trusted, and the freshness indicates the time period in which the second network device is attested to be trusted.

The identity of the second network device may be determined by using the identity information. Specific trusted content that is attested in a latest trustworthiness attestation process and whether the trusted content is applicable to current trustworthiness attestation may be determined by using the trusted content. A time period in which the latest trustworthiness attestation is completed may be determined by using the freshness, to determine whether the latest trustworthiness attestation is within a validity period, and determine whether trustworthiness attestation needs to be performed again. The first attestation result includes the foregoing information. This helps improve efficiency of the trustworthiness attestation, helps improve security of communication between the network devices, and helps improve security of the network devices.

In some embodiments, the transmission response message includes the first attestation information. The first attestation information is used to verify whether the second network device is trusted. The transmission response message further includes the parameter needed for establishing the TLS/SSL protocol-based connection.

In some embodiments, all content of the first attestation information is included in a specific field of the transmission response message.

In some other embodiments, content of the first attestation information is included in at least two fields of the transmission response message.

In some embodiments, the first attestation information is included in a field that is specially used to store extension information and that is of the transmission response message.

In some other embodiments, the first attestation information is included in a field that is not specially used to store extension information and that is of the transmission response message.

For example, a field is added to a tail of the transmission response message to store the first attestation information.

The first attestation information is included in the transmission response message, so that after receiving the transmission response message, the first network device may further obtain the first attestation information by parsing the transmission response message. Implementation of this embodiment of this application helps the first network device recognize and process first response information, helps improve the efficiency of establishing the trust relationship between the first network device and the second network device, and helps improve the extensibility, the compatibility, and the flexibility of the communication method in this embodiment of this application.

In some embodiments, the first attestation information includes a second random number. The transmission response message includes a third random number. The third random number is for anti-replay of the transmission response message.

In an embodiment, the second random number is used as the third random number.

The second random number is set in the first attestation information. This helps prevent the first network device from a replay attack, and helps improve the security of the communication between the first network device and the second network device.

In some embodiments, the transmission response message includes a second extension. The second extension includes extension information supported by the second network device. The first attestation information is included in the second extension.

In some embodiments, the first attestation information includes the trustworthiness status information of the second network device. The trustworthiness status information is included in the second extension.

In some other embodiments, the first attestation information includes the trustworthiness status information and a trustworthiness status verification message of the second network device. The verification information is used to verify the trustworthiness status information. The trustworthiness status information and the trustworthiness status verification information are included in the second extension.

The second extension includes the quote and the measurement log, so that after receiving the transmission response message, the first network device may obtain the trustworthiness status information of the second network device; or may determine, based on the trustworthiness status verification information included in the transmission response message, that the trustworthiness status information of the second network device is trusted, and then verify, based on the trustworthiness status information, whether the second network device is in a trusted execution. This helps improve the security of the communication between the first network device and the second network device.

In some embodiments, the first attestation information includes the quote and the measurement log. The quote includes the digest of the measurement log. The measurement log includes process information about the trustworthiness measurement of the second network device.

The quote and the measurement log are included in the second extension.

The first attestation information includes the digest of the measurement log and the measurement log, and full text of the measurement log is restored through the digest of the measurement log to compare with the measurement log in the first attestation information, to determine whether the first attestation information is tampered with.

In some embodiments, the first attestation information further includes a measurement value. The measurement value is the trustworthiness status information of the second network device.

In some embodiments, the first attestation information further includes a trusted signature. The trusted signature is a signature that is of a trusted computing platform supported by the second network device and that is for the measurement value.

The trustworthiness status information may be obtained by performing an operation on the process information about the trustworthiness measurement, and the trustworthiness status information obtained through the operation is compared with the measurement value included in the first attestation information, so that mutual verification between the measurement value and the measurement log may be implemented.

The first attestation information includes the measurement value, so that the first network device may perform mutual verification on the measurement value in the quote by using the process information about the trustworthiness measurement of the second network device in the measurement log. This helps improve security of the attestation information, and helps prevent the attestation information from being tampered with. Including the trusted signature in the quote helps verify that the measurement value included in the quote is from the second network device.

In some embodiments, the transmission response information includes a transmission certificate. The transmission certificate is used as an identity proof of the second network device.

The first attestation information includes an attestation certificate. The attestation certificate is used to attest that the trusted computing platform supported by the second network device is trusted.

Including the attestation certificate in the first attestation information helps determine whether the trusted platform used by the second network device for remote attestation is trusted, helps improve security of the first attestation information, and helps improve security of the first network device.

In some embodiments, the attestation certificate is used as the transmission certificate.

In this embodiment of this application, the attestation certificate is used as the transmission certificate. This helps reduce complexity of the transmission response information, helps the first network device parse the transmission response information, and helps improve the efficiency of establishing the mutual trust relationship between the first network device and the second network device, to establish the connection for data transmission.

In some embodiments, the attestation certificate and the transmission certificate are associated with each other.

That the attestation certificate and the transmission certificate are associated with each other means that the attestation certificate and the transmission certificate have a unique identity proof of each other.

For example, it is stated in the attestation certificate that the attestation certificate is combined with the transmission certificate.

In this embodiment of this application, the attestation certificate and the transmission certificate are associated with each other. When the transmission certificate is invalid, the identity and the attestation information of the second network device may be verified through the attestation certificate associated with the transmission certificate. This helps the first network device verify the identity of the second network device, helps the first network device verify the attestation information of the second network device, and helps improve security and reliability of the communication between the first network device and the second network device.

S230: The first network device verifies whether the second network device is trusted and the identity of the second network device.

Verifying the identity means determining whether a sender of the transmission response message is the receiver of the transmission request message. Verifying whether the second network device is trusted means determining whether software and/or hardware of the sender of the transmission response message are/is in a trusted execution state.

In some embodiments, the first network device obtains a symmetric key through calculation, and decrypts the transmission response message with the symmetric key, to obtain a signature of an attestation public key and/or a transmission public key, the second random number, and the attestation certificate.

The first network device verifies the signature of the attestation public key and/or the transmission public key based on information about a signer of the attestation public key and/or the transmission public key, and determines that the attestation public key and/or the transmission public key are/is trusted.

The first network device verifies the third random number, and determines that the transmission response message is a non-replayed message.

The first network device determines, based on information about a signer of the attestation certificate, whether the attestation certificate is within a validity period, to determine whether the attestation certificate is trusted.

In some embodiments, upon determining that the signature of the attestation public key and/or the transmission public key, the third random number, and the attestation certificate are trusted, the first network device obtains, through parsing, the quote and the measurement log in the transmission response message, and determines, based on the trustworthiness status information of the hardware and/or software of the second network device included in the measurement log and a corresponding reference value of the hardware and/or software in a normal running state, whether the hardware and/or software of the second network device is in the trusted execution state, in other words, whether the second network device is trusted.

S240: The first network device and the second network device perform data exchange.

In some embodiments, the first network device sends identity information of the first network device before performing data exchange with the second network device, for the second network device to verify an identity of the first network device.

In some embodiments, the first network device sends identity information and second attestation information of the first network device before performing data exchange with the second network device, for the second network device to verify an identity of the first network device and determine that the first network device is trusted.

In some embodiments, the first network device sends identity information and a second attestation result of the first network device before performing data exchange with the second network device, for the second network device to verify an identity of the first network device and determine that the first network device is trusted.

In some embodiments, before performing data exchange with the second network device, the first network device receives challenge value sent by the second network device. The first network device sends identity information and second attestation information or a second attestation result of the first network device in response to the challenge value sent by the second network device, for the second network device to verify an identity of the first network device and whether the first network device is trusted.

In some embodiments, the challenge value is any one of a timestamp, a trusted random number, and a value of an agreed field.

In some embodiments, the first network device obtains a trusted random number before performing data exchange with the second network device, and generates attestation information of the first network device based on the trusted random number. The first network device sends identity information and the attestation information of the first network device to the second network device, for the second network device to verify an identity and the attestation information of the first network device.

The trusted random number herein may be a parameter that is considered trusted by both the first network device and the second network device, for example, a related parameter determined by using a blockchain.

In some embodiments, the first network device encrypts the transmission certificate of the first network device, the signature of the transmission public key, the measurement value, and the second random number with the symmetric key that is in the transmission response message and that is determined by the first network device and the second network device, where the transmission certificate of the first network device, the signature of the transmission public key of the first network device, and the like are used to attest identity information of the first network device, and the measurement value, the measurement log, and the like are used to attest that the first network device is trusted.

In some embodiments, the second network device determines the identity of the first network device by verifying the identity information of the first network device, and determines, by verifying the attestation information of the first network device, whether the first network device is trusted.

After the first network device and the second network device verify and confirm the identity and trustworthiness of each other, the first network device and the second network device start to perform data exchange.

In some embodiments, the second network device determines the identity of the first network device by verifying the identity information of the first network device.

After the first network device verifies that the identity of the second network device is correct and trusted, and the second network device verifies that the identity of the first network device is correct, the first network device and the second network device start to perform data exchange.

In some embodiments, the first network device and the second network device perform data exchange after encrypting application data with an agreed symmetric key.

Whether the second network device is trusted is requested to be verified in a process of establishing the secure communication channel between the first network device and the second network device. This helps obtain whether the second network device is trusted, and helps improve the security of the network devices and communication.

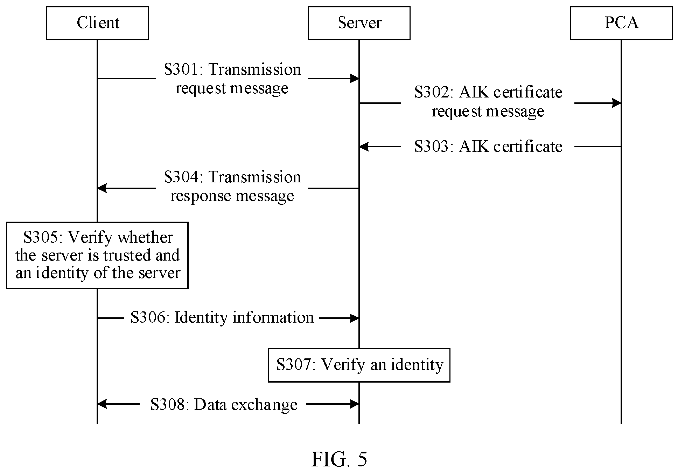

FIG. 5 shows application of the communication method integrated with trustworthiness measurement according to this embodiment of this application in a scenario.

In this embodiment of this application, a client requests to establish a communication connection to a server, and verifies, in a process of establishing the communication connection, whether the server is trusted. The server performs trustworthiness measurement on the server with a TPM as a core root of trust for measurement (core root of trust for measurement, CRTM), to generate attestation information of the server.

S301: The client sends a transmission request message to the server.

The transmission request message includes attestation request information. The transmission request message is used to request to establish a TLS/SSL protocol-based connection and request to attest that the server is trusted. The attestation request information is used to request to verify whether the server is trusted.

In an embodiment, the client sends a ClientHello message to the server, where the ClientHello message is used to request to establish the TLS/SSL protocol-based connection to the server, and is also used to request to attest that the server is trusted.

In some embodiments, the transmission request message includes one or more of the following information: a protocol version number, a cipher suite, a client random number, a compression method, key sharing, a signature algorithm, a PSK key exchange mode, a pre-shared key, and an extension.

In some embodiments, the attestation request information includes challenge value and a PCR identifier. The challenge value is a random number, and is used to prevent a replay attack of the attestation request information. The PCR identifier identifies a PCR that stores trustworthiness status information of the server.

Optionally, the PCR identifier may identify one or more PCRs that are specified by the client and that are in the server.

The one or more PCRs specified by the client are included in the to-be-verified PCR identifier, so that after receiving first request information, the server may send, based on the to-be-verified PCR identifier, the trustworthiness status information in the one or more PCRs specified by the client to the client. This helps improve efficiency of the client in determining whether the server is trusted.

Optionally, the PCR identifier may identify all PCRs that store the trustworthiness status information of the server and that are in the server.

Optionally, the challenge value in the attestation request information reuses the client random number in the transmission request message.

The random number in the transmission request information is reused as the challenge value in the attestation request information. This helps simplify a data structure of the transmission request message, improves efficiency of receiving, sending, and processing the transmission request message, and helps improve efficiency of establishing a trust relationship between the server and the client.

Optionally, the challenge value in the attestation request information is a time value, for example, a timestamp.

In some embodiments, the challenge value and the PCR identifier in the attestation request information are included in an extension of the transmission request information.

The challenge value and the PCR identifier that are included in the attestation request information are included in the extension of the transmission request information, so that the transmission request information may be kept in an original structure. This helps the server recognize and process the transmission request message, helps improve the efficiency of establishing the trust relationship between the server and the client, and helps improve extensibility, compatibility, and flexibility of the communication method in this embodiment.

S302: The server applies to a privacy certificate authority (PCA) for an AIK certificate.

In some embodiments, the server invokes the TPM to generate an AIK pair, encrypts a public AIK and an EK certificate of the TPM with a public key of the PCA, and sends the encrypted public AIK and the encrypted EK certificate of the TPM to the PCA, to apply for the AIK certificate.

In some embodiments, the server obtains the public key of the PCA offline.

S303: The server receives the AIK certificate.

In some embodiments, after verifying an AIK certificate request generated by the server, the PCA signs the AIK certificate with a private key of the PCA, encrypts the AIK certificate with a public key of the server, and sends the AIK certificate back to the server.

In some embodiments, the PCA first verifies trustworthiness of the EK certificate of the server, then signs the AIK certificate with a private key of the PCA, encrypts the AIK certificate with a public key of the server, and sends the AIK certificate back to the server.

S304: The server sends a transmission response message.

The transmission response message includes first attestation information. The first attestation information is used to verify whether the server is trusted. The transmission response message includes a parameter needed for establishing the TLS/SSL protocol-based connection.

In some embodiments, the first attestation information is included in an extension of the transmission response message.

Including the first attestation information in the extension of the transmission response message can keep an original structure of the transmission response message, helps the client recognize and process the transmission response message, helps improve the efficiency of establishing the trust relationship between the server and the client, and helps improve the extensibility, the compatibility, and the flexibility of the communication method in this embodiment.

In some embodiments, the first attestation information includes a quote and a measurement log. The quote includes a hash value of the measurement log, a measurement value stored in the PCR, and signature information of the measurement value stored in the PCR. The measurement value is trustworthiness status information of software and/or hardware of the server.

The measurement log in the attestation information includes process information about trustworthiness measurement of the hardware, the software, and/or the like of the server.

The quote and the measurement log are included in the extension of the transmission response message.

In some embodiments, the client may determine, by comparing the trustworthiness status information of the hardware or the software of the server with a data reference value provided by a manufacturer of the hardware and/or the software for the hardware and/or the software in a normal execution state, whether the hardware or the software of the server is in the normal execution state.

For example, a reference value provided by a manufacturer of a processor C1 of the server during delivery for the processor C1 in a normal execution state is 128. When the measurement log in the attestation information indicates that a current execution state value of the processor C1 is 128, the client considers that the processor C1 is in the normal execution state; or when the measurement log in the attestation information indicates that a current execution state value of the processor C1 is 256, the client considers that the processor C1 is in an abnormal execution state, that is, the processor C1 is untrusted.

For example, a reference value provided by a manufacturer of a processor C2 of the server during delivery for the processor C2 in a normal execution state is 64. When the measurement log in the attestation information indicates that a current execution state value of the processor C2 is within a preset range (63 to 65), the client considers that the processor C2 is in the normal execution state; or when the measurement log in the attestation information indicates that a current execution state value of the processor C2 is not within a preset range, the client considers that the processor C2 is in an abnormal execution state, that is, the processor C2 is untrusted.

In some embodiments, the transmission response information includes a TLS certificate. The TLS certificate includes a transmission public key of the server. The transmission public key is calculated by using a DHE algorithm or an ECDHE algorithm. A parameter in the algorithm is jointly determined by the server and the client. The attestation response message includes the AIK certificate. The AIK certificate includes the public AIK generated by the TPM of the server.

Optionally, the AIK certificate is used as the TLS certificate.

Optionally, the AIK certificate and the TLS certificate are associated with each other.

In some embodiments, the server determines, based on the attestation request information included in the transmission request message, the PCR indicated by the client, signs, with a private AIK, a measurement value and the challenge value that are stored in the PCR, and includes signed data in the attestation information.

In some embodiments, the server calculates a pre-master key by using the DHE algorithm or the ECDHE algorithm, and generates a master key by using the client random number, a server random number, and the pre-master key.

In some embodiments, the transmission response message further includes one or more of information such as an encrypted extension, a certificate request, a certificate, a certificate proof, a completion indication, and application data. The server encrypts, with the generated master key, the information included in the transmission response message, and sends the encrypted data to the client.

S305: The client verifies an identity and a trustworthiness status of the server based on the transmission response message.

In some embodiments, the client calculates a pre-master key by using the ECDHE algorithm, generates a master key by using the client random number, the server random number, and the pre-master key, and decrypts the transmission response message with the generated master key.

The client obtains the first attestation information based on the decrypted transmission response message, determines whether a communication channel may be established with the server, and determines, based on the first attestation information, whether the server is trusted.

In some embodiments, the client obtains the TLS certificate and a TLS certificate proof of the server based on the transmission response message; and after verifying that the TLS certificate and the TLS certificate proof of the server are correct, the client determines that the communication channel may be established with the server.

In some embodiments, the client obtains the quote and the measurement log based on the attestation information, and performs signature verification on the quote and the measurement log with the public AIK of the server. When comparison shows that data corresponding to the hash value of the measurement log in the quote is consistent with that in the measurement log, the measurement value of the hardware and/or the software of the server included in the quote is compared with the corresponding reference value, to determine whether the server is trusted.

S306: The client sends identity proof information to the server.

In some embodiments, after establishing a trust in the server, the client sends a TLS certificate and a TLS certificate proof of the client to the server.

S307: The server verifies identity information of the client.

The server verifies the client based on the received TLS certificate and TLS certificate proof of the client.

S308: The client starts to perform data exchange with the server.

In some embodiments, the client and the server perform data exchange after encrypting the application data with the master key.

In this embodiment of this application, the client verifies the identity of the server and determines whether the server is trusted, and the server verifies an identity of the client. Based on successful verification, the client communicates with the server. This helps improve security of data transmission between the client and the server, and helps improve security of devices of the client and the server.

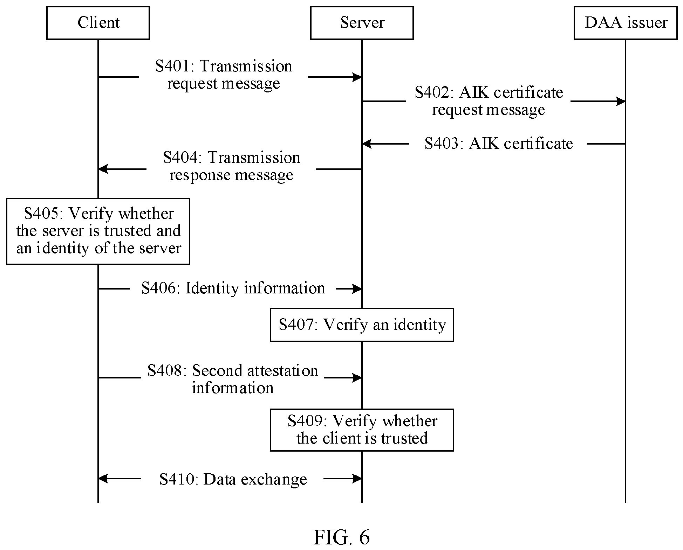

FIG. 6 shows application of the communication method integrated with trustworthiness measurement according to this embodiment of this application in another scenario.

In this embodiment of this application, a client requests to establish a communication connection to a server, and initiates remote attestation to the server when requesting the connection, to request to verify an identity and a trustworthiness status of the server, to determine whether the server is trusted. The server uses a TCM as a trusted platform. A DAA issuer issues an AIK certificate to the server. The server also requests to verify identity information of the client and whether the client is trusted.

S401: The client sends a transmission request message to the server.

The transmission request message includes attestation request information, and is used to request to attest that the server is trusted, request to establish a TLS/SSL protocol-based connection to the server, and request to attest that the server is trusted. The attestation request message is used to request to attest that the server is trusted.

In some embodiments, the attestation request information includes challenge value. The challenge value is used by the server to generate attestation information. The attestation information is used to verify whether the server is trusted.

In some embodiments, the attestation request information includes attestation identity information. The attestation identity information is used to request to obtain attestation information or an attestation result. The attestation information is used to verify whether the server is trusted. The attestation result indicates that the server is attested to be trusted.

In an embodiment, the client sends a ClientHello message to the server, where the ClientHello message is used to request to establish the TLS/SSL protocol-based connection to the server, and is also used to request to attest that the server is trusted.

The ClientHello message is sent, so that the server may obtain, from the client, a request for establishing the connection and a request for verifying whether the server is trusted.

S402: The server sends an AIK certificate request message to the DAA.

In an embodiment, the server sends the AIK certificate request message to the DAA by using a "zero-knowledge proof" method.

S403: The DAA sends, to the server, the AIK certificate signed by the DAA.

The DAA issuer sends the AIK certificate signed in a DAA manner to the server, without obtaining a platform identity of the TCM.

In an embodiment, the DAA sends, to the server by using the "zero knowledge proof" method, the AIK certificate signed by the DAA issuer.

A trusted certificate is issued in the DAA manner, so that a public AIK of the TCM trusted platform can be signed without exposing the identity of the TCM, to obtain the AIK certificate. Based on the AIK certificate, the client may determine whether the server has a valid and secure trusted platform.

S404: The server sends a transmission response message to the client.

The transmission response message includes first attestation information. The first attestation information is used to verify whether the server is trusted. The transmission response message includes a parameter needed for establishing the TLS/SSL protocol-based connection.

In an embodiment, the server sends a ServerHello message to the client, where the ServerHello message includes the parameter needed for establishing the TLS/SSL protocol-based connection and the first attestation information of the server.

The ServerHello message is sent, so that the client may obtain the parameter needed for establishing the connection to the server and the first attestation information of the server, to determine whether the server is trusted.

S405: The client verifies the identity of the server and whether the server is trusted.

In an embodiment, after performing operations such as decryption and signature verification on the ServerHello message, the client obtains the parameter needed for establishing the connection to the server and the first attestation information of the server, to determine whether a communication channel may be established with the server and determine whether the server is trusted.

S406: The client sends the identity information of the client to the server.

After verifying that the identity of the server is correct and determining that the server is trusted, the client sends the identity information of the client to the server.

In an embodiment, after verifying that the identity of the server is correct and determining that the server is trusted, the client sends a TLS certificate and a TLS certificate proof of the client to the server.

The TLS certificate and the TLS certificate proof are sent, so that the server may obtain the identity information and identity proof information of the client, to verify an identity of the client. This helps improve security of a device of the server.

S407: The server verifies the identity of the client.

The server verifies the client based on the received TLS certificate and TLS certificate proof of the client.

In an embodiment, the TLS certificate and the TLS certificate proof are sent to the server after encrypted with a symmetric key agreed by the client and the server. After receiving encrypted information, the server decrypts the information with the symmetric key to obtain the TLS certificate and the TLS certificate proof, and verifies signature information of the TLS certificate proof and content of the TLS certificate, to verify the identity of the client.

S408: The client sends second attestation information of the client to the server.

In an embodiment, the client obtains challenge value sent by the server. The client sends the second attestation information of the client to the server in response to the challenge value.

In an embodiment, the client obtains a trusted random number, generates the second attestation information of the client based on the trusted random number, and sends the second attestation information to the server.

In an embodiment, the client obtains a timestamp for generation of an EK certificate of the client, generates the second attestation information based on the timestamp, and sends the second attestation information to the server.

In an embodiment, the client selects 128^{th} to 160^{th} bits of the transmission request message as the challenge value according to a specification in a TLS/SSL protocol, generates the second attestation information based on the agreed data segment, and sends the second attestation information to the server.

S409: The server verifies whether the client is trusted.

In some embodiments, the server compares a trustworthiness status reference value of the client with received trustworthiness status information of the client to determine whether the client is trusted. A detailed process of determining whether the client is trusted is similar to the description in S304. For details, refer to S304. Details are not described herein again.

S410: The client performs data exchange with the server.

The client and the server start to perform data exchange after verifying the identity and trustworthiness of each other.

The trusted certificate is issued in the DAA manner, so that the trusted certificate may be obtained without exposing an identity of a requester requesting to obtain the trusted certificate. This helps improve reliability of the attestation information of the server, improve security of the server, improve security of the client, and improve security of communication between the client and the server.

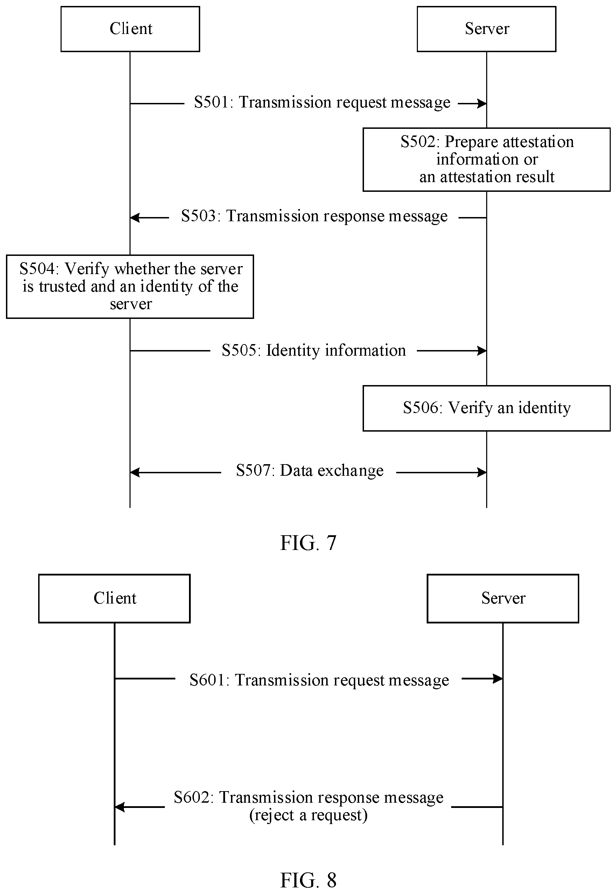

FIG. 7 shows application of the communication method integrated with trustworthiness measurement according to this embodiment of this application in still another scenario.

In this embodiment of this application, a client initiates remote attestation to a server, to request to verify an identity of the server and whether the server is trusted. The server uses Intel SGX or Trustzone as a trusted platform.

S501: The client sends a transmission request message.

The transmission request message includes attestation request information, and is used to request to verify whether the server is trusted and request to establish a TLS/SSL protocol-based connection to the server. The attestation request information is used to request to verify whether the server is trusted.

In an embodiment, the client sends a ClientHello message to the server, where the ClientHello message is used to request to establish the TLS/SSL protocol-based connection to the server, and is also used to request to attest that the server is trusted.

The ClientHello message is sent, so that the server may obtain, from the client, a request for establishing the connection and a request for attesting that the server is trusted.

S502: The server generates attestation information or an attestation result.

In an embodiment, the server uses Intel SGX as the trusted platform. An authenticated enclave of the server obtains current information to generate a report structure, and uses a signed report structure as first attestation information used as a basis for determining whether the server is trusted.

In an embodiment, the server uses Trustzone as the trusted platform. The server performs integrity verification on software, hardware, and data of the server, to generate first attestation information used as a basis for determining whether the server is trusted.

In some embodiments, the server generates the attestation result based on latest trustworthiness attestation, where the attestation result is used as a basis for determining whether the server is trusted.

In some embodiments, a first attestation result includes one or more of identity information, trusted content, and freshness, where the identity information indicates an identity of a verifier attesting that the server is trusted, the trusted content indicates content that is of the server and that is attested to be trusted, and the freshness indicates a time period in which the server is attested to be trusted.

In some embodiments, a first attestation result indicates that attestation content included in the attestation result is not within a validity period, the attestation result is invalid, and the attestation result cannot be used to attest whether the server is trusted. The server re-collects attestation information to attest that the server is trusted.

In some embodiments, a first attestation result indicates that attestation content included in the attestation result is within a validity period, and may be directly used to attest that the server is trusted.

S503: The server sends a transmission response message.

The transmission response message includes first attestation information. The first attestation information includes the first attestation information or the first attestation result of the server. The transmission response message includes a parameter needed for establishing the TLS/SSL protocol-based connection.

In an embodiment, the server sends a ServerHello message to the client, where the ServerHello message includes the parameter needed for establishing the TLS/SSL protocol-based connection and the first attestation information of the server.

The ServerHello message is sent, so that the client may obtain the parameter needed for establishing the connection to the server and the first attestation information or the first attestation result of the server, to determine whether the server is trusted, and establish a communication channel with the server.

S504: The client verifies the identity of the server and whether the server is trusted.

In an embodiment, after performing operations such as decryption and signature verification on the ServerHello message, the client obtains the parameter needed for establishing the connection to the server and the attestation information of the server, to determine whether the communication channel may be established with the server and determine whether the server is trusted.

S505: The client sends identity information of the client.

After verifying that the identity of the server is correct and determining that the server is trusted, the client sends the identity information of the client to the server.

In an embodiment, after verifying that the identity of the server is correct and determining that the server is trusted, the client sends a TLS certificate and a TLS certificate proof of the client to the server.

The TLS certificate and the TLS certificate proof are sent, so that the server may obtain the identity information and identity proof information of the client, to verify an identity of the client. This helps improve security of a device of the server.

S506: The server verifies the identity of the client.

The server verifies the client based on the received TLS certificate and TLS certificate proof of the client.

In an embodiment, the TLS certificate and the TLS certificate proof are sent to the server after encrypted with a symmetric key agreed by the client and the server. After receiving encrypted information, the server decrypts the information with the symmetric key to obtain the TLS certificate and the TLS certificate proof, and verifies signature information of the TLS certificate proof and content of the TLS certificate, to verify the identity of the client.

S507: The client performs data exchange with the server.

The client verifies the identity and the attestation information of the server. The server verifies the identity of the client. After it is confirmed that the verified information is correct, data exchange is started.

In this embodiment of this application, the client verifies the identity and the attestation information of the server, and the server verifies the identity of the client. Based on successful verification, the client communicates with the server. This helps improve security of data transmission between the client and the server, and helps improve security of devices of the client and the server.

FIG. 8 shows application of the communication method integrated with trustworthiness measurement according to this embodiment of this application in another scenario.

In this embodiment of this application, a client requests to establish a communication connection to a server, and requests to verify whether the server is trusted. The server uses a TPM as a trusted platform. After obtaining a request from the client, the server rejects to provide attestation information for the client and rejects to establish the connection to the client.

S601: The client sends a transmission request message.

The transmission request message includes attestation request information, and is used to request to attest that the server is trusted and request to establish a TLS/SSL protocol-based connection to the server. The attestation request information is used to request to attest that the server is trusted.

In an embodiment, the client sends a ClientHello message to the server, where the ClientHello message is used to request to establish the TLS/SSL protocol-based connection to the server, and is also used to request to attest that the server is trusted.

The ClientHello message is sent, so that the server may obtain, from the client, a request for establishing the connection and a request for verifying whether the server is trusted.

S602: The server sends a transmission response message.

The server determines, based on content of the transmission request information, not to establish the connection to the client and not to send the attestation information of the server to the client.

In some embodiments, the transmission request message includes one or more of the following information: a protocol version number, a cipher suite, a client random number, a compression method, key sharing, a signature algorithm, a PSK key exchange mode, a pre-shared key, and an extension. The server obtains capability information of the client based on the foregoing information. The server determines that the client does not support connection establishment with the server, and thus rejects the request of the client for establishing the connection and the request for attesting that the server is trusted.

The server sends the transmission response message to the client, where the transmission response message indicates that the client does not have a capability of establishing the connection.

In some embodiments, the server determines, based on running statuses of software, hardware, and the like of the server, that the connection cannot be established to the client currently, and thus rejects the request of the client for establishing the connection and the request for verifying whether the server is trusted.

The server sends the transmission response message to the client, where the transmission response message indicates that the server cannot establish the connection to the client currently.

In some embodiments, the server determines, based on the attestation request information in the transmission response request, that the attestation request information is replayed information, and thus rejects the request of the client for establishing the connection and the request for attesting that the server is trusted.

The server sends the transmission response message to the client, where the transmission response message indicates that the attestation request information of the client fails to be verified.

After receiving the transmission request message sent by the client, the server obtains, from the client, the request for establishing the connection and the request for attesting that the server is trusted, and determines, based on the content included in the transmission request information, whether to establish the connection to the client and provide the attestation information. When the client or the server does not satisfy a connection establishment condition or another condition, the server rejects the request of the client, and sends the transmission response message to indicate a cause of rejection. This helps improve security of communication between the client and server, and helps improve security of the server.

With reference to FIG. 5 to FIG. 8, the foregoing describes application of the communication method integrated with trustworthiness measurement provided in embodiments of this application in different scenarios. Based on a same inventive concept as the foregoing method embodiments, embodiments of this application further provide a communication apparatus. The communication apparatus may have functions of the first network device or client and the second network device or server in the foregoing method embodiments, and may be configured to perform steps performed by the first network device or client or the second network device or server in the foregoing method embodiments.

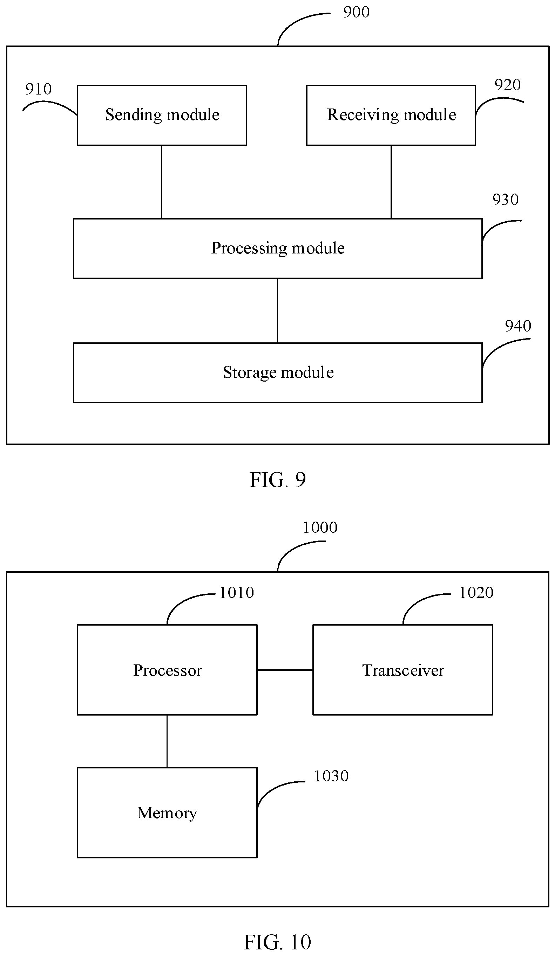

In a possible implementation, the communication apparatus 900 shown in FIG. 9 may be used as the first network device or client in the foregoing method embodiments, and performs the steps performed by the first network device or client in the foregoing method embodiments.

As shown in FIG. 9, the communication apparatus 900 may include a sending module 910 and a receiving module 920.

The sending module 910 may be configured to support the communication apparatus 900 in sending information, for example, performing sending actions performed by the first network device or client in S110, S140, S160, S210, S240, S301, S306, S308, S401, S406, S408, S410, S501, S505, S507, and S601 in FIG. 3, FIG. 4, FIG. 5, FIG. 6, FIG. 7, and FIG. 8.

The receiving module 920 may be configured to support the communication apparatus 900 in receiving information, for example, performing receiving actions performed by the first network device or client in S120, S160, S220, S304, S308, S404, S408, S410, S503, S507, and S602 in FIG. 3, FIG. 4, FIG. 5, FIG. 6, FIG. 7, and FIG. 8.

Optionally, the communication apparatus 900 may further include a processing module 930. The processing module 930 is coupled to the sending module 910 and the receiving module 920, and may be configured to support the communication apparatus 900 in performing processing actions in the foregoing method embodiments, for example, performing processing actions performed by the first network device or client in S130, S230, S305, S405, and S504 in FIG. 3, FIG. 4, FIG. 5, FIG. 6, and FIG. 7.

In another possible implementation, the communication apparatus 900 shown in FIG. 9 may be used as the second network device or server in the foregoing method embodiments, and perform the steps performed by the second network device or server in the foregoing method embodiments.

As shown in FIG. 9, the communication apparatus 900 may include a sending module 910 and a receiving module 920.

The sending module 910 may be configured to support the communication apparatus 900 in sending information, for example, performing sending actions performed by the second network device or server in S120, S160, S220, S240, S302, S304, S308, S402, S404, S410, S503, S507, and S602 in FIG. 3, FIG. 4, FIG. 5, FIG. 6, FIG. 7, and FIG. 8.

The receiving module 920 may be configured to support the communication apparatus 900 in receiving information, for example, performing receiving actions performed by the second network device or server in S110, S140, S160, S210, S240, S303, S306, S308, S403, S406, S408, S410, S501, S505, S507, and S601 in FIG. 3, FIG. 4, FIG. 5, FIG. 6, FIG. 7, and FIG. 8.

Optionally, the communication apparatus 900 may further include a processing module 930. The processing module 930 is coupled to the sending module 910 and the receiving module 920, and may be configured to support the communication apparatus 900 in performing processing actions in the foregoing method embodiments, for example, performing processing actions performed by the second network device or server in S150, S240, S307, S407, S409, S502, and S506 in FIG. 3, FIG. 4, FIG. 5, FIG. 6, and FIG. 7.

Optionally, the communication apparatus 900 may further include a storage module 940, configured to store program code and data of the communication apparatus 900.

FIG. 10 is a block diagram of a communication device 1000 according to an embodiment of this application. As shown in the figure, the communication device 1000 includes at least one processor 1010 and a transceiver 1020. The processor 1010 is coupled to a memory, and is configured to execute instructions stored in the memory, to control the transceiver 1020 to send a signal and/or receive a signal.

Optionally, the communication device 1000 further includes a memory 1030, configured to store instructions.

In some embodiments, the processor 1010 and the memory 1030 may be combined into one processing apparatus, and the processor 1010 is configured to execute program code stored in the memory 1030, to implement the foregoing functions. During specific implementation, the memory 1030 may alternatively be integrated into the processor 1010, or may be independent of the processor 1010.

In some embodiments, the transceiver 1020 may include a receiver (or referred to as a receive machine) and a transmitter (or referred to as a transmit machine).

The transceiver 1020 may further include one or more antennas. The transceiver 1020 may alternatively be a communication interface or an interface circuit.

When the communication device 1000 is a chip, the chip includes a transceiver unit and a processing unit. The transceiver unit may be an input/output circuit or a communication interface. The processing unit may be a processor, a microprocessor, or an integrated circuit integrated on the chip.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method integrated with trustworthiness measurement, comprising:
sending, a transmission request message, wherein the transmission request message is used to request to establish a transport layer security/secure sockets layer, TLS/SSL protocol-based connection, and the transmission request message is further used to request to verify whether a second network device is trusted; and
receiving, a transmission response message, wherein the transmission response message is used to respond to the transmission request message;
wherein the transmission request message comprises attestation request information, and the attestation request information is used to request to verify whether the second network device is trusted; and
the transmission request message comprises a first extension, the first extension comprises extension information supported by a first network device, and the attestation request information is comprised in the first extension.

2. The communication method according to claim 1, wherein the method further comprises:
sending second attestation information or a second attestation result, wherein the second attestation information is used to verify whether a first network device is trusted, and the second attestation result comprises an attestation result indicating that the second network device is attested to be trusted.

3. The communication method according to claim 2, wherein before the sending second attestation information, the method further comprises:
determining, by the first network device based on the transmission response message, that the second network device is trusted; or
obtaining, by the first network device, a second challenge value, wherein the second challenge value is used to generate the second attestation information.

4. The communication method according to claim 3, wherein the second challenge value is any one of a timestamp, a trusted random number, and a value of an agreed field.

5. A communication method integrated with trustworthiness measurement, comprising:
receiving a transmission request message, wherein the transmission request message is used to request to establish a transport layer security/secure sockets layer, TLS/SSL protocol-based connection, and the transmission request message is further used to request to verify whether a second network device is trusted; and
sending a transmission response message in response to the transmission request message; wherein the transmission request message comprises attestation request information, and the attestation request information is used to request to verify whether the second network device is trusted; and
the transmission request message comprises a first extension, the first extension comprises extension information supported by a first network device, and the attestation request information is comprised in the first extension.

6. The communication method according to claim 1 or 5, wherein the transmission request message comprises attestation identity information, the attestation identity information is used to request to obtain first attestation information or a first attestation result, the first attestation information is used to verify whether the second network device is trusted, and the first attestation result comprises an attestation result indicating that the second network device is attested to be trusted.

7. The communication method according to claim 1, 5 or 6, wherein the attestation request information comprises a first challenge value, the first challenge value is used to generate first attestation information, and the first attestation information is used to verify whether the second network device is trusted, and the first challenge value is any one of a timestamp, a trusted random number, and a value of an agreed field; or
the attestation request information comprises a storage object identifier, the storage object identifier identifies a storage object of a measurement value of the second network device, and the storage object identifier is comprised in the first extension.

8. The communication method according to claim 7, wherein the transmission request message comprises a first random number, and the agreed field is a field corresponding to the first random number.

9. The communication method according to claim 1 or any one of claims 5 to 8, wherein the transmission response message comprises the first attestation result, the first attestation result comprises the attestation result indicating that the second network device is attested to be trusted, and the transmission response message further comprises a parameter needed for establishing the TLS/SSL protocol-based connection.

10. The communication method according to claim 9, wherein the first attestation result comprises one or more of identity information, trusted content, and freshness, the identity information indicates an identity of a verifier attesting that the second network device is trusted, the trusted content indicates content that is of the second network device and that is attested to be trusted, and the freshness indicates a time period in which the second network device is attested to be trusted.

11. The communication method according to claim 1 or any one of claims 5 to 10, wherein the transmission response message comprises the first attestation information, the first attestation information is used to verify whether the second network device is trusted, and the transmission response message further comprises a parameter needed for establishing the TLS/SSL protocol-based connection.

12. The communication method according to any one of claims 5 to 11, wherein the method further comprises: receiving, second attestation information or a second attestation result from the first network device, wherein the second attestation information is used to verify whether the first network device is trusted, and the second attestation result comprises an attestation result indicating that the first network device is attested to be trusted.

13. A communication apparatus, comprising at least one module configured to implement the method according to any one of claims 1 to 12.

14. A computer program product, wherein the computer program product comprises computer program code; and when the computer program code is run on a computer, the method according to any one of claims 1 to 12 is performed.
